# EUROPEAN PATENT APPLICATION

(11) **EP 4 832 376 A1**
(43) Date of publication of application: **28.10.2026**
(21) Application number: 24921409.9
(22) Date of filing: 03.09.2024
(51) Int. Cl.: H04B 10/25

(54) **OPTICAL MODULE, COMMUNICATION DEVICE, COMMUNICATION SYSTEM, CHIP, AND METHOD**

(30) Priority: 31.01.2024 CN 202410138297
(71) Applicant: Huawei Technologies Co., Ltd., Shenzhen, Guangdong 518129 (CN)
(72) Inventor: WU, Shuangyuan, Shenzhen, Guangdong 518129 (CN); WU, Bing, Shenzhen, Guangdong 518129 (CN); SU, Changzheng, Shenzhen, Guangdong 518129 (CN); SI, Minggang, Shenzhen, Guangdong 518129 (CN); LIU, Tianzhu, Shenzhen, Guangdong 518129 (CN); MENG, Hongru, Shenzhen, Guangdong 518129 (CN)
(74) Representative: Grünecker Patent- und Rechtsanwälte PartG mbB
(86) International application number: PCT/CN2024/116565
(87) International publication number: WO 2025/161384

(57) **Abstract**

This application provides an optical module, a communication device, a communication system, a chip, and a method, to reduce layout space occupied by a single optical component on a line board. This facilitates integration of more optical components on the line board with a fixed size. A DSP chip in the optical module may be configured to perform equalization processing on an electrical signal, and the like. In addition, when the optical module is disposed on the line board and a DSP is directly connected to an electrical cross-connect board, the DSP may further implement a function of a line-side framer, to help prevent a framer chip from being disposed in a single optical component of the line board. This helps reduce costs and power consumption of OTN hardware devices, and helps reduce layout space occupied by the single optical component on the line board, to facilitate integration of more optical components on the line board with a fixed size. In addition, a manufacturer can implement a function of processing the electrical signal and the function of the line-side framer by investing in a single DSP chip, so that the manufacturer can reduce overall research and development costs of the chip and shorten a research and development period of the product.

## Description

This application claims priority to Chinese Patent Application No. 202410138297.1, filed with the China National Intellectual Property Administration on January 31, 2024 and entitled "OPTICAL MODULE, COMMUNICATION DEVICE, COMMUNICATION SYSTEM, CHIP, AND METHOD", which is incorporated herein by reference in its entirety.

### TECHNICAL FIELD

This application relates to the field of optical communication technologies, and in particular, to an optical module, a communication device, a communication system, a chip, and a method.

### BACKGROUND

An optical transport network (optical transport network, OTN) is a transport network for networking at an optical layer based on a wavelength division multiplexing technology. A data frame used by an OTN device may be an OTN data frame (or referred to as an OTN frame for short). The OTN frame may be used to carry a plurality of types of service data, to manage and monitor the service data.

An OTN device with an electrical cross function usually includes a plurality of tributary boards, a plurality of line boards, and at least one electrical cross-connect board. The tributary board and the line board each are integrated with a plurality of optical components. The optical components in the tributary board usually include a service-side optical module and a tributary-side framer chip, and the optical components in the line board usually include a line-side optical module and a line-side framer chip. The service-side optical module is configured to receive an optical signal that carries service data, and perform optical-electrical conversion on the optical signal, to obtain an electrical signal. A tributary-side framer is configured to frame the electrical signal, to obtain the service data, and map the service data into an optical data unit. The electrical cross-connect board is configured to: groom cross-connections of optical data units received from the tributary-side framer, encapsulate the optical data units into cross-connect data units, and send the cross-connect data units to a destination line-side framer. The line-side framer is configured to: receive the cross-connect data units; decapsulate the cross-connect data units, to obtain the optical data units; map and/or multiplex, into an optical transport unit, the optical data unit obtained through decapsulation; and frame the optical transport unit, to obtain an electrical signal. The line-side optical module is configured to perform electrical-optical conversion on the electrical signal, to obtain an optical signal. The optical signal may be transmitted to another OTN device in the OTN through an optical fiber link.

As a transmission capacity of the OTN device continuously increases, higher requirements are imposed on integration of optical components on the line board. However, because a size of the line board is usually fixed, how to integrate more optical components into the line board with the fixed size becomes an urgent problem to be resolved.

### SUMMARY

This application provides an optical module, a communication device, a communication system, a chip, and a method, to reduce layout space occupied by a single optical component on a line board. This facilitates integration of more optical components on the line board with a fixed size.

It is found through analysis that a device manufacturer usually invests in a single chip solution to manufacture a tributary-side framer chip and a line-side framer chip, to reduce overall research and development costs of the framer chip and shorten a research and development period of the product. In other words, a single framer chip is integrated with both a circuit for implementing a function of a line-side framer (referred to as a line frame processing circuit for short) and a circuit for implementing a function of a tributary-side framer (referred to as a tributary frame processing circuit for short). However, when the framer chip is integrated into the optical component of the line board for use, the tributary frame processing circuit in the framer chip is not used. This circuit causes large static circuit power consumption, increases power consumption of the line board, and occupies large layout space and heat dissipation space on the line board.

In view of the foregoing analysis, according to a first aspect, this application provides an optical module. The optical module may include an optical connector, an optical device, a digital signal processor DSP, and an electrical connector. The DSP is configured to: receive a data frame by using the electrical connector; when the optical module is disposed on a line board and the electrical connector is directly connected to an electrical cross-connect board, decapsulate the data frame, to obtain an optical data unit; map and/or multiplex, into an optical transport unit, the optical data unit obtained through decapsulation; and frame the obtained optical transport unit, to obtain an electrical signal. The DSP is further configured to process the obtained electrical signal. The optical device is configured to: convert the processed electrical signal into an optical signal, and send the optical signal by using the optical connector.

A DSP chip is usually integrated into the optical module. The DSP chip is configured to process the electrical signal received from the electrical connector. For example, the DSP is configured to perform equalization processing and/or digital-to-analog conversion on the electrical signal. The DSP may send the processed electrical signal to the optical device, to improve signal quality. When the optical module is disposed on the line board and the electrical connector is directly connected to the electrical cross-connect board, because the DSP may further implement a function of a line-side framer, this helps prevent a framer chip from being disposed in a single optical component of the line board. This helps reduce costs and power consumption of OTN hardware devices, and helps reduce layout space occupied by the single optical component on the line board, to facilitate integration of more optical components on the line board with a fixed size. In addition, a manufacturer may implement a function of processing the electrical signal and the function of the line-side framer by investing in a single DSP chip solution, so that the manufacturer can reduce overall research and development costs of the chip and shorten a research and development period of the product.

In addition, because different chips usually communicate with each other by using a serializer/deserializer SerDes, compared with a DSP chip connected to an electrical cross-connect board by using a framer chip, the DSP chip is directly connected to the electrical cross-connect board, to help reduce a quantity of SerDes through which data is transmitted between the DSP chip and the electrical cross-connect board. This reduces a data transmission delay between the DSP and the electrical cross-connect board, and reduce power consumption of the OTN device.

In view of the foregoing analysis, this application proposes preparation of an optical module applicable to a plurality of application scenarios, to help reduce overall research and development costs of an optical communication device and shorten a research and development period of the product. Therefore, this application proposes the following: Optionally, the DSP is further configured to: when the optical module is disposed on a tributary-line integrated board, map the data frame into an optical data unit; map and/or multiplex, into an optical transport unit, the optical data unit obtained through mapping; and frame the obtained optical transport unit, to obtain an electrical signal, where the data frame may also be referred to as service data; and/or the DSP is further configured to: when the optical module is disposed on the line board and the electrical connector is directly connected to a framer on the line board, frame the data frame, to obtain an electrical signal. As described above, the framer is configured to: decapsulate a cross-connect data unit sent by the electrical cross-connect board, to obtain an optical data unit; map and/or multiplex the obtained optical data unit into an optical transport unit; and send the obtained optical transport unit to the electrical connector.

It is found through analysis that some functions performed by the DSP when the optical module is disposed on the tributary-line integrated board are the same as some functions performed by the DSP when the optical module is disposed on the line board and the electrical connector is directly connected to the framer. These functions include, for example, mapping and/or multiplexing the optical data unit into the optical transport unit, and framing the obtained optical transport unit, to obtain the electrical signal. Therefore, a same circuit in the DSP is reused to implement these functions in different scenarios, and the DSP with a smaller size is applicable to a plurality of application scenarios, to reduce layout space occupied by a single optical component on the line board, and improve integration of optical components on the line board.

Optionally, a serializer/deserializer SerDes is integrated into the DSP. A rate of the SerDes is adjustable. For example, the SerDes is configured to receive the data frame at a first data transmission rate when the optical module is disposed on the line board and the electrical connector is directly connected to the electrical cross-connect board. The SerDes is configured to receive the data frame at a second data transmission rate when the optical module is disposed on the tributary-line integrated board, and/or the optical module is disposed on the line board and the electrical connector is directly connected to the framer on the line board. The first data transmission rate may be greater than the second data transmission rate.

Optionally, the DSP is further configured to receive a configuration signal. When the configuration signal is at a first logic level, the DSP determines that the optical module is disposed on the line board and the electrical connector is directly connected to the electrical cross-connect board. When the configuration signal is at a second logical level, the DSP determines that the optical module is disposed on the tributary-line integrated board, and/or the optical module is disposed on the line board and the electrical connector is directly connected to the framer on the line board.

Optionally, the optical module further includes a controller, and the controller is configured to send the configuration signal to the DSP; and/or the DSP is directly connected to a configuration pin of the electrical connector, and the configuration pin is configured to receive the configuration signal.

Optionally, the optical module may be a colored optical module, and an optical signal obtained by performing electrical-optical conversion on an electrical signal by the optical device may be a colored optical signal. Optionally, the colored optical signal may be a coherent optical signal. Therefore, this helps improve signal quality in optical communication.

According to a second aspect, this application provides an optical module, including an optical connector, an optical device, a digital signal processor DSP, and an electrical connector. The optical device is configured to: receive an optical signal by using the optical connector, and convert the optical signal into an electrical signal. The DSP is configured to process the electrical signal. The DSP is further configured to: frame the electrical signal, to obtain an optical transport unit; when the optical module is disposed on a line board and the electrical connector is directly connected to an electrical cross-connect board, demap and/or demultiplex the optical transport unit, to obtain an optical data unit; encapsulate the obtained optical data unit, to obtain a data frame; and send the obtained data frame by using the electrical connector.

Optionally, the DSP is further configured to: when the optical module is disposed on a tributary-line integrated board, demap and/or demultiplex the optical transport unit, to obtain an optical data unit; demap the obtained optical data unit into a data frame; and send the obtained data frame by using the electrical connector; and/or the DSP is further configured to: when the optical module is disposed on the line board and the electrical connector is directly connected to a framer on the line board, send the optical transport unit by using the electrical connector, where the framer is configured to demap and/or demultiplex the optical transport unit into an optical data unit; encapsulate the obtained optical data unit into a cross-connect data unit; and send the cross-connect data unit to the electrical cross-connect board.

Optionally, a serializer/deserializer SerDes is integrated into the DSP. The SerDes is configured to send the obtained data frame at a first data transmission rate when the optical module is disposed on the line board and the electrical connector is directly connected to the electrical cross-connect board. The SerDes is configured to send the obtained data frame at a second data transmission rate when the electrical connector is disposed on the tributary-line integrated board, and/or the electrical connector is disposed on the line board and is directly connected to the framer on the line board. The first data transmission rate may be greater than the second data transmission rate.

Optionally, the DSP is further configured to receive a configuration signal. When the configuration signal is at a first logic level, the DSP determines that the optical module is disposed on the line board and the electrical connector is directly connected to the electrical cross-connect board. When the configuration signal is at a second logical level, the DSP determines that the optical module is disposed on the tributary-line integrated board, and/or the optical module is disposed on the line board and the electrical connector is directly connected to the framer on the line board.

Optionally, the optical module further includes a controller, and the controller is configured to send the configuration signal to the DSP; and/or the DSP is directly connected to a configuration pin of the electrical connector, and the configuration pin is configured to receive the configuration signal.

Optionally, the DSP is configured to perform equalization processing and/or analog-to-digital conversion on the electrical signal.

Optionally, the optical module may be a colored optical module, and an optical signal obtained by performing electrical-optical conversion on an electrical signal by the optical device may be a colored optical signal. Optionally, the colored optical signal may be a coherent optical signal. Therefore, this helps improve signal quality in optical communication.

A difference between the optical module provided in the second aspect and the optical module provided in the first aspect mainly lies in that the optical module provided in the first aspect is configured to transmit downlink data, and the optical module provided in the second aspect is configured to transmit uplink data. The downlink data is data transmitted from the electrical connector of the optical module to the optical connector, and the uplink data is data transmitted from the optical connector of the optical module to the electrical connector. It may be considered that a method performed by the optical module provided in the second aspect is an inverse process of a method performed by the optical module provided in the first aspect. For beneficial effect of the second aspect, refer to beneficial effect of related content in the first aspect for understanding.

According to a third aspect, this application provides a communication device. The communication device includes a mainboard and one or more optical modules disposed on the mainboard, and the one or more optical modules are optical modules in any implementation of the first aspect or the second aspect.

Optionally, the mainboard is a line board, the communication device further includes an electrical cross-connect board, and the one or more optical modules are directly connected to the electrical cross-connect board.

According to a fourth aspect, this application provides a communication system. The communication system includes a plurality of communication devices and an optical transport network, the optical transport network is configured to transmit an optical signal between different communication devices in the plurality of communication devices, and the plurality of communication devices include at least one communication device in any implementation of the third aspect.

Because the optical modules provided in the first aspect and/or the second aspect are integrated into the communication device provided in the third aspect and the communication system provided in the fourth aspect, for technical effect and technical details that can be obtained in the third aspect and the fourth aspect, refer to corresponding content in the first aspect and the second aspect. Details are not described herein again.

According to a fifth aspect, this application provides a data transmission method, and the method is applied to an optical module. The method includes: receiving a data frame by using an electrical connector of the optical module; when the optical module is disposed on a line board and the electrical connector is directly connected to an electrical cross-connect board, decapsulating the data frame, to obtain an optical data unit; mapping and/or multiplexing, into an optical transport unit, the optical data unit obtained through decapsulation; and framing the obtained optical transport unit, to obtain an electrical signal; and processing the obtained electrical signal, where the processed electrical signal is converted into an optical signal, and the optical signal is sent by using an optical connector of the optical module.

Optionally, the method further includes: when the optical module is disposed on a tributary-line integrated board, mapping the data frame into an optical data unit; mapping and/or multiplexing, into an optical transport unit, the optical data unit obtained through mapping; and framing the obtained optical transport unit, to obtain an electrical signal; and/or when the optical module is disposed on the line board and the electrical connector is directly connected to a framer on the line board, framing the data frame, to obtain an electrical signal, where the framer is configured to decapsulate a cross-connect data unit sent by the electrical cross-connect board, to obtain an optical data unit; mapping and/or multiplexing the obtained optical data unit into an optical transport unit; and sending the obtained optical transport unit to the electrical connector.

Optionally, the optical module has a serializer/deserializer SerDes, and the receiving the data frame by using the electrical connector of the optical module includes: controlling the SerDes to receive the data frame at a first data transmission rate when the optical module is disposed on the line board and the optical module is directly connected to the electrical cross-connect board; and controlling the SerDes to receive the data frame at a second data transmission rate when the optical module is disposed on the tributary-line integrated board, and/or the optical module is disposed on the line board and the optical module is directly connected to the framer on the line board, where the first data transmission rate may be greater than the second data transmission rate.

Optionally, the method further includes: receiving a configuration signal; when the configuration signal is at a first logic level, determining that the optical module is disposed on the line board and the optical module is directly connected to the electrical cross-connect board; and when the configuration signal is at a second logical level, determining that the optical module is disposed on the tributary-line integrated board, and/or the optical module is disposed on the line board and the optical module is directly connected to the framer on the line board.

Optionally, the processing the obtained electrical signal includes: performing equalization processing and/or digital-to-analog conversion on the obtained electrical signal.

According to a sixth aspect, this application provides a data transmission method, and the method is applied to an optical module. The method includes: processing an electrical signal, where the electrical signal is obtained by performing optical-electrical conversion on an optical signal, and the optical signal is received by using an optical connector of the optical module; framing the electrical signal, to obtain an optical transport unit; when the optical module is disposed on a line board and the electrical connector of the optical module is directly connected to an electrical cross-connect board, demapping and/or demultiplexing the optical transport unit, to obtain an optical data unit; encapsulating the obtained optical data unit, to obtain a data frame; and sending the obtained data frame by using the electrical connector.

Optionally, the method further includes: when the optical module is disposed on a tributary-line integrated board, demapping and/or demultiplexing the optical transport unit, to obtain an optical data unit; demapping the obtained optical data unit into a data frame; and sending the obtained data frame by using the electrical connector; and/or when the optical module is disposed on the line board and the electrical connector is directly connected to a framer on the line board, sending the optical transport unit by using the electrical connector, where the framer is configured to demap and/or demultiplex the optical transport unit into an optical data unit; encapsulating the obtained optical data unit into a cross-connect data unit; and sending the cross-connect data unit to the electrical cross-connect board.

Optionally, a serializer/deserializer SerDes is integrated into the optical module, and the sending the obtained data frame by using the electrical connector includes: controlling the SerDes to send the obtained data frame at a first data transmission rate when the optical module is disposed on the line board and the electrical connector is directly connected to the electrical cross-connect board; and controlling the SerDes to send the obtained data frame at a second data transmission rate when the electrical connector is disposed on the tributary-line integrated board, and/or the electrical connector is disposed on the line board and is directly connected to the framer on the line board, where the first data transmission rate may be greater than the second data transmission rate.

Optionally, the method further includes: receiving a configuration signal; when the configuration signal is at a first logic level, determining that the optical module is disposed on the line board and the electrical connector is directly connected to the electrical cross-connect board; and when the configuration signal is at a second logical level, determining that the optical module is disposed on the tributary-line integrated board, and/or the optical module is disposed on the line board and the electrical connector is directly connected to the framer on the line board.

Optionally, the processing the electrical signal includes: performing equalization processing and/or analog-to-digital conversion on the electrical signal.

The method provided in the fifth aspect may be performed by the optical module provided in the first aspect, or the DSP in the optical module, or an optical communication device on which the optical module provided in the first aspect is disposed. The method provided in the sixth aspect may be performed by the optical module provided in the second aspect, or the DSP in the optical module, or an optical communication device on which the optical module provided in the second aspect is disposed.

The optical module provided in the first aspect or the DSP in the optical module may perform the method provided in the fifth aspect, and the optical module provided in the second aspect or the DSP in the optical module may perform the method provided in the sixth aspect. Therefore, for technical effect that can be obtained by the methods and technical details of implementing the foregoing methods, refer to corresponding content in the first aspect and the second aspect. Details are not described herein again.

According to a seventh aspect, this application provides a chip. The chip is integrated into an optical module, the chip includes a plurality of circuits, and at least one circuit in the plurality of circuits is configured to perform the method in any possible implementation of the fifth aspect and the sixth aspect. Optionally, the chip may be the DSP in the optical module provided in any possible implementation of the first aspect and the second aspect. For beneficial effect of the chip provided in the seventh aspect, refer to corresponding content in the first aspect and the second aspect. Details are not described herein again.

### BRIEF DESCRIPTION OF DRAWINGS

FIG. 1 schematically shows a possible structure of a communication system;
FIG. 2 schematically shows a possible structure of an OTN device shown in FIG. 1;
FIG. 3 schematically shows another possible structure of an OTN device shown in FIG. 1;
FIG. 4-1 and FIG. 4-2 each schematically show a possible structure of an optical module;
FIG. 5-1 schematically shows another possible structure of an optical module shown in FIG. 4-1;
FIG. 5-2 and FIG. 5-3 each are a diagram of disposing an optical module on a mainboard;
FIG. 6 schematically shows another possible structure of an OTN device;
FIG. 7 schematically shows a possible structure of a forwarding device integrated with an optical module;
FIG. 8-1 schematically shows another possible implementation of a service processing unit in FIG. 5-1;
FIG. 8-2 schematically shows functional units enabled by a service processing unit in various scenarios in a downlink data transmission direction;
FIG. 8-3 schematically shows functional units enabled by a service processing unit in various scenarios in an uplink data transmission direction;
FIG. 8-4 schematically shows another possible implementation of a line frame processing subunit;
FIG. 9 schematically shows a possible structure of a rate-adjustable SerDes; and
FIG. 10 to FIG. 12 schematically show data transmission methods in a scenario 1 to a scenario 3.

### DESCRIPTION OF EMBODIMENTS

An optical transport network (optical transport network, OTN) is a transport network for networking at an optical layer based on a wavelength division multiplexing technology, and may be widely applied to an access network, a metropolitan area network, an aggregation network, a data center network, a mobile network, a backbone network, a spatial light communication network, a power optical communication network, and the like. Wavelength division multiplexing is multiplexing of optical signals with different wavelengths into a same optical fiber for transmission.

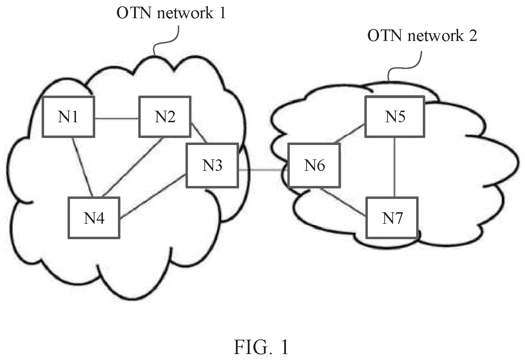

An OTN network is usually formed by connecting a plurality of OTN devices through an optical fiber link, and may form different topological types such as a line type, a ring type, and a mesh type based on a specific requirement. FIG. 1 schematically shows a possible structure of a communication system. The communication system shown in FIG. 1 includes an OTN network 1 and an OTN network 2. The two OTN networks may be networks of a same type or networks of different types described above. A quantity of OTN networks in the communication system is not limited in this application, and the communication system may include more or fewer OTN networks.

In FIG. 1, a rectangle represents an OTN device, and a connection line between the rectangles represents an optical fiber link. As shown in FIG. 1, each OTN network includes a specific quantity of OTN devices, and different OTN devices are connected through an optical fiber link. In FIG. 1, for example, the OTN network 1 includes an OTN device N1 to an OTN device N4, and the OTN network 2 includes an OTN device N5 to an OTN device N7. A quantity of OTN devices in the OTN network is not limited in this application.

The OTN device may have various interfaces, for example, may be compatible with a complete conventional SDH interface, and may further provide various data interfaces, for example, gigabit Ethernet. For example, the OTN device may support at least one of the following interfaces: an Ethernet interface, an STM-1/4/16/64 interface, a multi-protocol label switching (MPLS) interface, and a data interface at any rate from 100 M to 5 G. Correspondingly, the OTN device may carry a plurality of types of service data (or referred to as client signals).

A data frame used by the OTN device may be an OTN data frame (or referred to as an OTN frame for short), and is used to carry the service data, to manage and monitor the service data. The OTN frame may be an optical data unit (optical data unit, ODU), for example, an ODUk, an ODUCn, or an ODUflex, or an optical transport unit (optical transport unit, OTU), for example, an OTUk, an OTUCn, or a flexible OTN (flexible OTN, FlexO) frame. The OTN frame may alternatively be of another frame structure applicable to the optical network. A specific value of k is not limited in this application. For example, k=0/1/2/2e/3/4/C1/25/50.

A conventional WDM device does not have a switching function, but the OTN device provides a solution of the switching function for the wavelength division device, so that the wavelength division device can better support the switching optical network function.

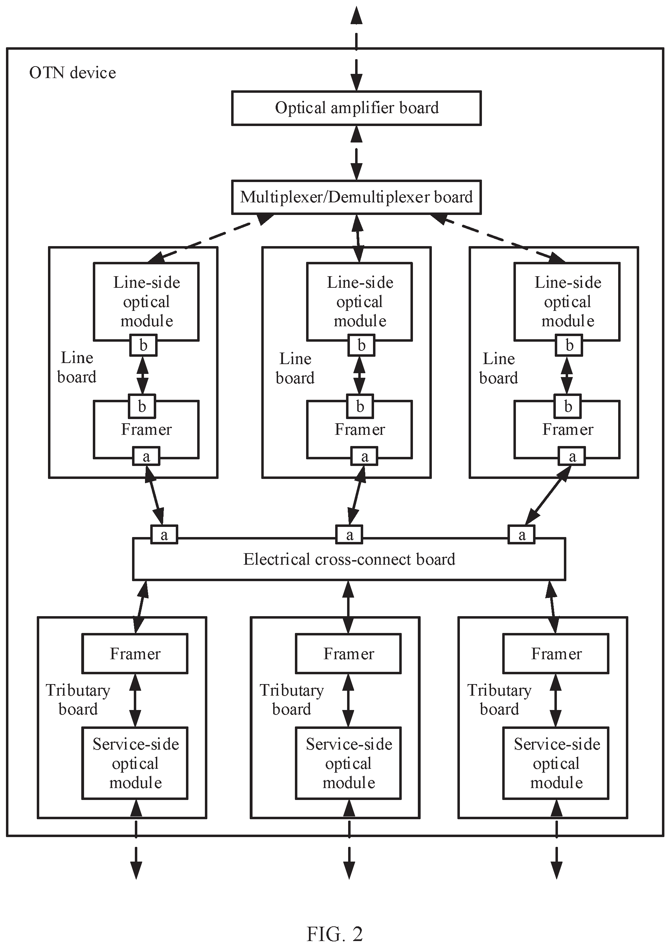

FIG. 2 schematically shows a possible structure of an OTN device. As shown in FIG. 2, the OTN device may include a plurality of tributary boards, an electrical cross-connect board, a plurality of line boards, a multiplexer/demultiplexer board, and an optical amplifier board. In the accompanying drawings of this application, a dashed line with an arrow represents an optical signal, and a solid line with an arrow represents an electrical signal.

The tributary board can provide a client-side interface to access service data on a client side. The tributary board may use a service-side optical module to receive service data carried by an optical signal, perform optical-electrical (optical-electrical, O/E) conversion, then, use a framer (framer) to map the service data to an optical data unit (Optical Data Unit, ODU) k, and send the service data to an electrical cross-connect board for scheduling; and/or the tributary board may be configured to implement an inverse process of the foregoing process.

A structure of the OTN frame used by the framer in the tributary board is not limited to the ODUk in this application, and the framer may use another type of OTN frame. The tributary board can provide a plurality of types of client-side interfaces, for example, the tributary board can provide at least one of the following interfaces: an Ethernet interface, an STM-1/4/16/64 interface, a multi-protocol label switching (MPLS) interface, and a data interface at any rate from 100 M to 5 G. Correspondingly, the service data may be service data transmitted through a corresponding interface.

The electrical cross-connect board is configured to groom an electrical signal between the tributary board and the line board. After receiving the ODUk from the tributary board, the electrical cross-connect board may groom the ODUk, determine a path (or line board) selected for the ODUk, map the ODUk to a cross-connect data unit, and send the cross-connect data unit to a corresponding line board.

The line board may provide a line-side interface to process a data frame on a line side. For example, the line board may use the framer to receive the cross-connect data unit groomed by the electrical cross-connect board, and demap the cross-connect data unit into the ODUk. Then, the line board may use a line-side optical module to map and/or multiplex the ODUk into an optical transport unit (Optical Transport Unit, OTU), and then perform electrical-optical (electrical-optical, E/O) conversion; and/or the line board may be configured to implement an inverse process of the foregoing process.

Types of optical modules (or referred to as optical interfaces) in the tributary board and the line board are not limited in this application. For example, the service-side optical module may be a gray optical module, and the line-side optical module may be a colored optical module. A wavelength of an optical signal received/sent by the gray optical module fluctuates within a wide range, and there is no standard wavelength. A wavelength of an optical signal received/sent by the colored optical module fluctuates within a small range near a center wavelength, and there is a standard wavelength. The colored optical module may be a coherent optical module.

Optionally, the optical module in the tributary board may be replaced with an electrical interface. Correspondingly, the tributary board receives the service data through the electrical interface.

The multiplexer/demultiplexer board multiplexes or demultiplexes optical signals with different wavelengths. A multiplexing function of the multiplexer/demultiplexer board may be as follows: In a downlink data transmission direction, the multiplexer/demultiplexer board may multiplex a plurality of optical signals sent by a plurality of line boards into one optical signal, and send the optical signal to another OTN device. A demultiplexing function of the multiplexer/demultiplexer board may be as follows: In an uplink data transmission direction, the multiplexer/demultiplexer board may demultiplex the optical signal received from the another OTN device into the plurality of optical signals, and send the plurality of optical signals to the plurality of line boards. Optionally, the OTN device may not include the multiplexer/demultiplexer board. For example, different line boards may transmit optical signals by using different optical fibers.

An optical amplifier (optical amplifier, OA) may be disposed in the optical amplifier board to amplify power of an optical signal (referred to as optical power for short). The optical amplifier board may implement the foregoing amplification process on an optical signal received from another OTN device and/or an optical signal sent to another OTN device by the OTN device in which the optical amplifier board is located. The optical amplifier board is optional. For example, when an optical signal needs to be transmitted for a long range, the OTN device may use the optical amplifier board to amplify optical power. When an optical signal is transmitted for a short range, the OTN device may not use the optical amplifier board to amplify optical power.

The OTN device may include different types and different quantities of boards based on a specific requirement. For example, a network device serving as a core node may have no tributary board. A network device serving as an edge node may have a plurality of tributary boards. For example, the OTN device may include a plurality of electrical cross-connect boards, and the plurality of electrical cross-connect boards may share traffic load. When an electrical cross-connect board in the plurality of electrical cross-connect boards is faulty, traffic switching load can be evenly shared by the other electrical cross-connect boards, to improve reliability of the OTN device.

Optionally, the OTN device may further include a rack, the rack is provided with a plurality of slots, and a plurality of boards in the OTN device may be separately disposed in the plurality of slots of the rack.

The OTN device may further include another module that is not shown in FIG. 2. For example, the OTN device may further include a fan, a power supply, an auxiliary unit, and a system control and communication board. The power supply is configured to supply power to the OTN device, and may include an active power supply and a standby power supply. The fan is configured to dissipate heat of the device. The auxiliary board is configured to provide an auxiliary function, for example, provide an external alarm or access an external clock. The system control and communication board is configured to implement system control and communication. Specifically, information may be collected from the different boards by using a backplane, or a control instruction is sent to a corresponding board.

In FIG. 1, for example, the line board includes a pair of one framer and one line-side optical module. A plurality of pairs of framers and line-side optical modules may be disposed on a single line board. In addition, as increasingly high requirements are imposed on a data transmission rate of the OTN device, quantities of framers and line-side optical modules integrated on the line board continuously increase, which imposes higher requirements on integration of the line board.

A device manufacturer usually invests in a single chip solution to manufacture a framer chip in a tributary board and a line board. In other words, the framer chip not only has a client-side mapping function of the framer in the tributary board to perform mapping and demapping between service data and an ODUk, but also has a line-side mapping function of the framer in the line board to perform mapping and demapping between an ODU and an OTU. In addition, the framer chip also has a line frame processing function to perform encapsulation and decapsulation between an ODUk and a cross-connect data unit. This helps reduce overall research and development costs of the framer chip, and helps shorten a research and development period of the product.

As services processed by a line-side framer and a tributary-side framer continuously increase, the framer chip has an increasingly larger size, and occupies large layout space and heat dissipation space in the line board, which restricts further improvement of integration of the line board, and is not conducive to heat dissipation.

It is found through analysis that, because a client-side mapping function needs to map and demap a plurality of types of service data into and from the ODUk, a scale of a logic circuit that is in the framer chip and that is used to implement the client-side mapping function is usually far greater than a scale of a logic circuit used to implement a line-side mapping function. A current 800G framer is used as an example. A power consumption ratio and an area ratio of a logic circuit configured to perform a framer function of the line board to a logic circuit configured to perform a framer function of the tributary board are respectively about 1:3 and 1:3.5. When the framer chip is disposed on the line board for use, the circuit used to implement the client-side mapping function in the framer chip is not used, that is, a large quantity of circuits in the framer chip are not used. These circuits cause high static circuit power consumption, and occupy large layout space and heat dissipation space on the line board.

In addition to an optical transmitter and an optical receiver, a digital signal processor (digital signal processor, DSP) chip is usually disposed in the line-side optical module. The DSP mentioned in this application may also be replaced with an optical digital signal processor (optical digital signal processor, ODSP). A type of the DSP chip is not limited in this application. For example, the DSP may be an application-specific integrated circuit (application-specific integrated circuit, ASIC). The DSP chip can complete signal shaping, generate a digital baseband signal, and complete conversion between an analog signal and a digital signal. The DSP chip may further receive an integrated coherent receiver (integrated coherent receiver, ICR) signal, complete conversion from an analog signal to a digital signal, and then perform equalization/compensation on the digital signal.

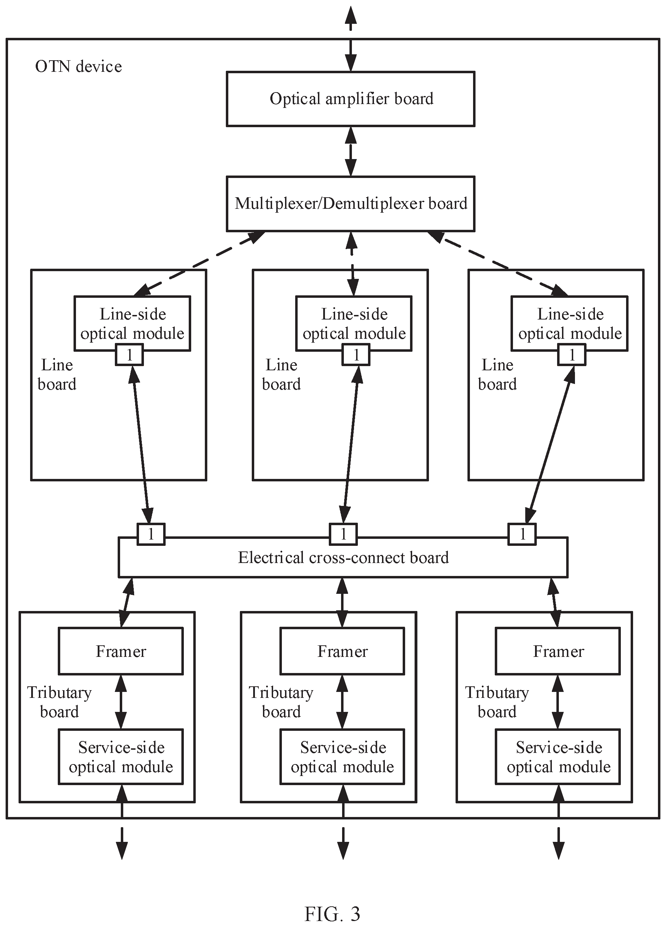

Based on the foregoing findings, this application proposes that the DSP may further complete a plurality of service interfaces and processing. For example, a line frame processing subunit and a line-side mapping subunit may be integrated into the DSP, to respectively implement a line frame processing function and a line-side mapping function. Therefore, the optical module is directly connected to the electrical cross-connect board, and no framer needs to be disposed in the line board, to reduce costs and power consumption of an OTN hardware device. Correspondingly, the OTN device may be shown in FIG. 3. In addition, because a size of a circuit used to implement the line frame processing subunit and the line-side mapping subunit is smaller than the size of the framer, even if the line frame processing subunit and the line-side mapping subunit are newly disposed in an existing DSP chip, an increased size of the DSP chip is smaller than the size of the framer. This helps reduce layout space and heat dissipation space on the line board, helps improve integration of the line board, optimizes layout of the line board in the OTN device, and ensures heat dissipation.

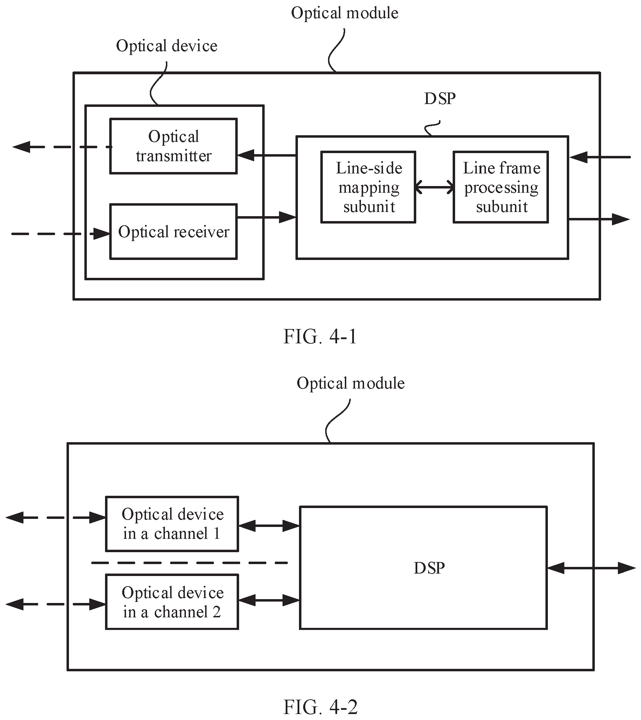

FIG. 4-1 schematically shows a possible structure of an optical module. Refer to FIG. 4-1. An optical device and a DSP may be integrated into the optical module.

An optical transmitter and/or an optical receiver may be integrated into the optical device. Optionally, when the optical device is configured to transmit a coherent optical signal, the optical device may further include a light source configured to generate an optical carrier. The optical transmitter may receive a digital electrical signal, load the digital electrical signal to an amplitude or a phase of the optical carrier through external modulation, and send a modulated optical carrier signal to an optical fiber channel. The optical receiver may receive the optical carrier signal through the optical fiber channel, and output signal light as an electrical signal based on the optical carrier (as local oscillator light). Processing performed by the optical transmitter and the optical receiver may be based on optical carriers from a same light source or different light sources. The optical carrier may be wavelength-tunable, a wavelength range includes S, C, L, and O bands and the like, and a wavelength spacing may be adjustable, for example, 37.5 GHz/50 GHz/100 GHz/150 GHz. The optical transmitter may include an electrical-optical modulator that completes dual-polarization amplitude or phase modulation. If Vpi of a modulator is large, a telecommunication signal that enters the modulator may be amplified first, to obtain sufficient output optical power and performance. Therefore, a signal output by the DSP usually needs to pass through an amplifier/driver to meet an amplitude requirement for an input signal of the modulator. The optical receiver mainly completes a coherent receiving function, including coherent mixing of an optical carrier and a received signal, and completes coherent demodulation and optical-electrical conversion. Optionally, the optical transmitter and the optical receiver may be co-packaged or integrated into one functional unit by using a single chip. Optionally, a light source (for example, a laser) configured to generate an optical carrier, the optical transmitter, and the optical receiver may alternatively be co-packaged or integrated into a functional unit by using a single chip. Alternatively, the optical transmitter, the optical receiver, and the light source are all independently packaged functional units.

The DSP may be directly connected to the electrical cross-connect board. In a downlink data transmission direction, the line frame processing subunit is configured to receive a cross-connect data unit obtained by encapsulating the groomed ODUk by the electrical cross-connect board, and demap the cross-connect data unit into the ODUk. Then, the line-side mapping subunit is configured to multiplex and/or map the ODUk, to obtain a FlexO. The optical transmitter is configured to perform electrical-optical conversion on an electrical signal carrying the FlexO, to obtain the optical signal for sending. In an uplink data transmission direction, the optical receiver is configured to receive an optical signal, and perform optical-electrical conversion on the optical signal, to obtain an electrical signal carrying the FlexO. The line-side mapping subunit is configured to demultiplex and/or demap the FlexO, to obtain the ODUk. The line frame processing subunit is configured to map the ODUk into the cross-connect data unit, and send the cross-connect data unit to the electrical cross-connect board.

The circuit corresponding to the line-side framer is newly disposed in the existing DSP chip of the optical module, to implement the line frame processing function. Because no new chip solution needs to be invested, overall research and development costs and a research and development period of a device are not increased. In addition, it is found by analyzing the logic circuit of the framer that the scale of the logic circuit corresponding to the client-side framer is far greater than the scale of the logic circuit corresponding to the line-side framer. Therefore, after the circuit corresponding to the line frame processing subunit and the line-side framer is newly disposed in the DSP, an increased size of the DSP is far less than the size of the framer. This helps reduce layout space and heat dissipation space on the line board, increases a quantity of optical modules integrated on a single line board, and facilitates heat dissipation.

Optionally, the optical device and the DSP may be co-packaged or integrated into one functional unit by using a single chip. Alternatively, the optical transmitter, the optical receiver, and the DSP may be co-packaged or integrated into one functional unit by using a single chip, and a light source configured to generate an optical carrier may be a different functional unit.

Optionally, a single optical module may support transmission of more channels/wavelengths. Correspondingly, the optical module may be integrated with a plurality of optical devices. As shown in FIG. 4-2, the optical module may be integrated with an optical device in a channel 1, an optical device in a channel 2, and a DSP. The DSP is connected to the two optical devices. The two optical devices are configured to transmit data of different channels, and wavelengths of the two optical devices may be different. Optionally, more optical devices may be integrated into the optical module, to support transmission of optical signals of more channels/wavelengths.

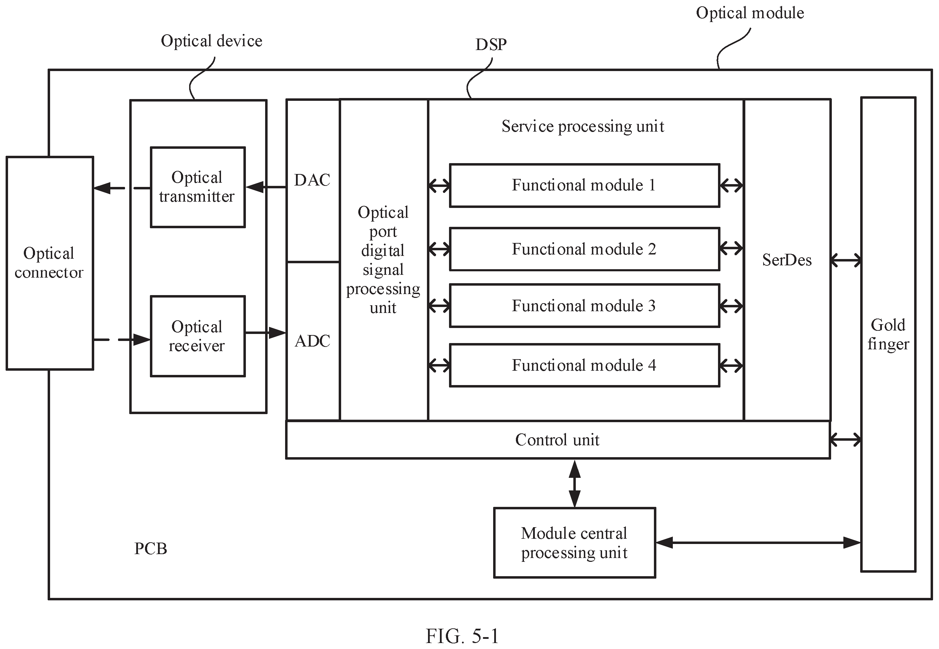

The DSP shown in FIG. 4-1 may have more functions, and correspondingly, may be integrated with more functional units. FIG. 5-1 schematically shows another possible structure of an optical module shown in FIG. 4-1. As shown in FIG. 5-1, the optical module may include a printed circuit board (printed circuit board, PCB), and the optical device and the DSP shown in FIG. 4-1 may be integrated into the PCB. As shown in FIG. 5-1, an optical connector and a gold finger may be further disposed on the PCB. The optical connector may be configured to connect to an optical fiber, and send, to the optical fiber, a downlink optical signal output by the optical transmitter and/or input, to the optical receiver, an uplink optical signal received from the optical fiber. The gold finger is configured to match and be disposed in a slot of a mainboard, to implement an electrical connection between the optical module and the mainboard. A type of the mainboard is not limited in this application, and is described below by using an example. Data flows of a plurality of services can be input/output through the gold finger. The PCB may be further integrated with other components such as a power supply module and a structural member. The structural member may be configured to perform functions such as positioning, support, and protection. For example, the structural member may be a housing of the optical module.

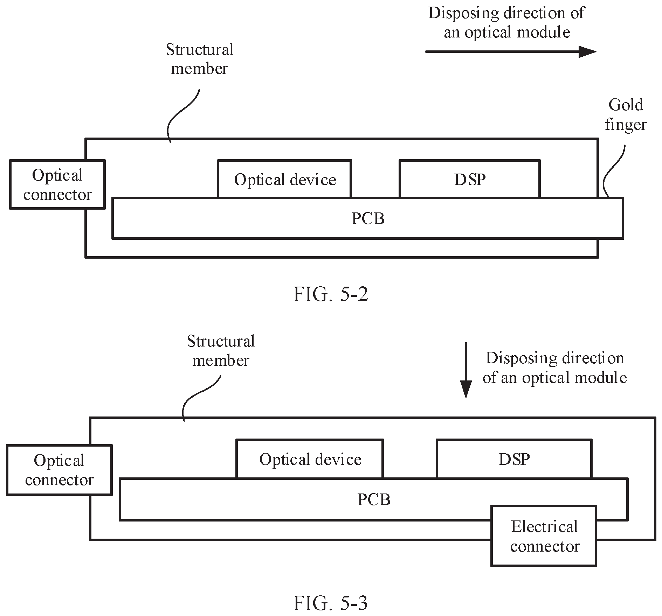

The gold finger can be designed on the PCB or disposed on the PCB through soldering. The gold finger and the structural member can cooperate to implement pluggable and fixed functions of the optical module. Correspondingly, the optical module may be used in a pluggable scenario. As shown in FIG. 5-2, the optical module may be disposed on an edge of the mainboard through the gold finger in a direction parallel to the PCB. The optical connector faces outwards, to facilitate plugging/unplugging of the optical fiber connected to the optical module.

The gold finger may alternatively be replaced with another type of electrical connector, and a direction in which the optical module is plugged in the mainboard may not be parallel to the PCB. As shown in FIG. 5-3, an electrical connector (for example, a high-speed connector) may be assembled on the PCB of the optical module, and the optical module may be disposed on the mainboard by using the electrical connector in a direction perpendicular to the PCB. The electrical connector in the vertical direction may have a larger quantity of connection pins (PIN), to help support a larger transmission capacity and support two specific implementations: the single channel/wavelength implementation shown in FIG. 4-1 and the multi-channel/wavelength implementation shown in FIG. 4-2.

As shown in FIG. 5-1, a serializer/deserializer (SERializer/DESerializer, SerDes) interface may be further integrated into the DSP. The SerDes can perform high-speed parallel/serial conversion or serial/parallel conversion on data, and serial input/output, to implement service data transmission with uplink and downlink chips. The SerDes may be directly connected to the electrical cross-connect board. As shown in FIG. 5-1, the SerDes may be connected to one or more conductive fingers (or referred to as pins) of the gold finger. In the OTN device shown in FIG. 3, it is assumed that the electrical cross-connect board is electrically connected to a pin in a slot on the line board through a route in the line board. The SerDes may be directly connected to a SerDes of the electrical cross-connect board by matching and disposing the gold finger in the slot.

In FIG. 3, the SerDes is represented by a rectangle marked with a number. The DSP and the electrical cross-connect board may each be configured with a SerDes1. The DSP and the electrical cross-connect board communicate with each other by using one level of SerDes.

In FIG. 2, the SerDes is represented by a rectangle marked with a letter. As shown in FIG. 2, the electrical cross-connect board communicates with the framer by using a SerDesa, and the framer communicates with the coherent optical module by using a SerDesb. In other words, data transmitted between the optical module and the electrical cross-connect board needs to pass through two levels of SerDes. A delay and power consumption of the SerDes are large. A 14 nm CMOS process is used as an example. Receiving/Sending of one level of 56G PAM4 SerDes that are interconnected causes an increase in a signal delay by more than 3 µs, and power consumption of the pair of SerDes is increased by 0.5 W at a rate of 112 Gbps.

The line frame processing subunit is newly disposed in the DSP, so that the DSP is directly connected to the electrical cross-connect board. This facilitates communication between the DSP and the electrical cross-connect board by using one level of SerDes, to help reduce a data transmission delay between the DSP and the electrical cross-connect board, and help reduce power consumption of the OTN device.

Because the cross-connect data unit is usually greater than the ODUk, in FIG. 2, a transmission rate at which the SerDesa transmits the cross-connect data unit is higher than a transmission rate at which the SerDesb transmits the ODUk.

In the OTN device shown in FIG. 3, because the cross-connect data unit is transmitted between the line-side optical module and the electrical cross-connect board, compared with the SerDesb of the line-side optical module shown in FIG. 2, the SerDes1 of the line-side optical module shown in FIG. 3 needs to use a higher transmission rate to communicate with the electrical cross-connect board. For example, the transmission rate of the SerDes1 of the line-side optical module shown in FIG. 3 is the same as a data transmission rate of the SerDesa of the electrical cross-connect board shown in FIG. 2.

On a transmission link in optical communication, there are a plurality of types of impairments, mainly including various losses, dispersion, polarization state rotation, non-linear effect, and channel impairments introduced by various optoelectronic devices. In addition, there are frequency offsets and phase noises of lasers at a receive end/transmit end. Optionally, still refer to FIG. 5-1. The DSP may further be integrated with an optical port digital signal processing unit, and the optical port digital signal processing unit is configured to compensate for various impairments in an electrical signal in a downlink data transmission direction and/or an uplink data transmission direction. The electrical signal may be a digital electrical signal. For example, the optical port digital signal processing unit may perform equalization processing on the electrical signal, for example, complete at least one of a plurality of following equalization processing: polarization demultiplexing recovery, clock recovery, dispersion compensation and channel equalization, frequency offset estimation and compensation, carrier phase recovery and signal decision, demodulation, dispersion of an optical fiber channel, polarization mode dispersion (polarization mode dispersion, PMD), and state of polarization (state of polarization, SOP) and non-linear compensation in a digital signal domain.

Still refer to FIG. 5-1. For the optical module having an optical transmitter, a digital-to-analog converter (digital-to-analog converter, DAC) may be further integrated into the DSP. In the downlink data transmission direction, the DAC is configured to receive a digital signal from the optical port digital signal processing unit, convert the digital signal into an analog signal, and send the analog signal to the optical transmitter. For the optical module having an optical receiver, an analog-to-digital converter (analog-to-digital converter, ADC) may be further integrated into the DSP. In the uplink data transmission direction, the ADC is configured to receive an analog signal from the optical receiver, convert the analog signal into a digital signal, and send the digital signal to the optical port digital signal processing unit.

As shown in FIG. 5-1, in this application, a logic power supply for data processing between the SerDes and the optical port digital signal processing unit of the DSP is referred to as a service processing unit. For example, the service processing unit is configured to receive data from the SerDes, process the data, and send the data to the optical port digital signal processing unit; and/or the service processing unit is configured to receive data from the optical port digital signal processing unit, process the data, and send the data to the SerDes. Correspondingly, it may be considered that the service processing unit includes the line frame processing subunit and the line-side mapping subunit that are described above. The service processing unit may be configured to complete processing and conversion of OTN transport-related protocols.

The service processing unit may have a plurality of functions, and correspondingly, the service processing unit may be integrated with a plurality of functional modules. For example, the service processing unit may include a functional module 1 shown in FIG. 5-1. The functional module 1 has a line frame processing function and a line-side mapping function.

To enable the optical module shown in FIG. 4-1 to be compatible with another application scenario, as shown in FIG. 5-1, the service processing unit may be further integrated with a functional module corresponding to the another application scenario, for example, at least one of a functional module 2 to a functional module 4. Different functional modules are applicable to different application scenarios. Optionally, the service processing unit may be further integrated with a functional module other than the functional module 2 to the functional module 4, so that the optical module is applicable to another application scenario.

The DSP may be further integrated with a control unit. The control unit is configured to control one or more units in the DSP, for example, configured to control the service processing unit to process data by using a functional module corresponding to an application scenario.

A quantity and types of other functional modules in the service processing unit are not limited in this application. The following uses examples to describe a possible application scenario of the line-side optical module provided in this application and a corresponding functional module used by the service processing unit.

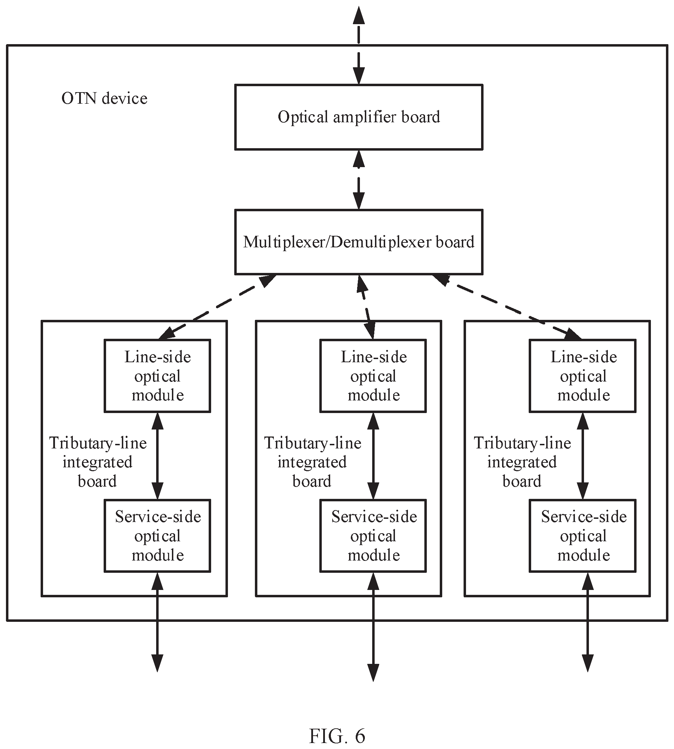

FIG. 6 schematically shows another possible structure of an OTN device. The OTN device shown in FIG. 6 includes a plurality of tributary-line integrated boards. The tributary-line integrated board integrates functions of a tributary board and a line board. For example, in the downlink data transmission direction, the tributary-line integrated board (muxponder) may receive, by using the service-side optical module, an optical signal carrying service data; perform O/E conversion on the optical signal; map the service data into an ODUk by using the line-side optical module; map and/or multiplex the ODUk, to obtain a FlexO; and include the FlexO in an optical signal for sending. In the uplink data transmission direction, the tributary-line integrated board may receive, by using the line-side optical module, the optical signal carrying the FlexO; perform O/E conversion on the optical signal; demap and/or demultiplex the FlexO, to obtain the ODUk; demap the ODUk into the service data; and use the service-side optical module to include the service data in the optical signal for sending.

Types of optical modules in the tributary-line integrated board are not limited in this application. For example, the service-side optical module may be a gray optical module, and the line-side optical module may be a colored optical module (for example, a coherent optical module). In addition, optionally, the service-side optical module in the tributary-line integrated board may be replaced with an electrical interface, and the service data is received through the electrical interface. The service-side optical module may be an optical module with a DSP, an optical module with CDR, or a linear-drive pluggable optical module (linear-drive pluggable optics, LPO).

In the OTN device shown in FIG. 6, it is assumed that the service-side optical module is electrically connected to a pin in a slot on the tributary-line integrated board through a route in the tributary-line integrated board. The SerDes may be connected to a SerDes of the service-side optical module by matching and disposing the gold finger shown in FIG. 5-1 in the slot.

Different from the OTN device shown in FIG. 2, the OTN device shown in FIG. 6 may not have an electrical switching function. For understanding of the multiplexer/demultiplexer board and the optical amplifier board in the OTN device, refer to the foregoing related content. Details are not described herein again.

To reduce overall research and development costs and further help shorten a research and development period of the product, optionally, the service processing unit shown in FIG. 5-1 may be further integrated with the functional module 2. The functional module 2 has a client-side mapping function and a line-side mapping function. When the optical module shown in FIG. 5-1 is directly connected to the electrical cross-connect board (for example, used in the line board shown in FIG. 3), the control unit is configured to control the service processing unit to process data by using the functional module 1. When the optical module shown in FIG. 5-1 is used as a line-side optical module in the tributary-line integrated board, the control unit controls the service processing unit to process data by using the functional module 2. The functional module 2 may be configured to: map the service data into the ODUk; then, map and/or multiplex the ODUk into the FlexO; and/or demap and/or demultiplex the FlexO into the ODUk; and demap the ODUk into the service data.

Therefore, the device manufacturer may invest in a single optical module or DSP solution, to apply the solution to the line-side optical module in the scenario shown in FIG. 3 (referred to as a scenario 1) and the line-side optical module in the scenario shown in FIG. 6 (referred to as a scenario 2). The scenario 1 may be an application scenario like long-haul dense wavelength division multiplexing (dense wavelength division multiplexing, DWDM) or metropolitan DWDM. The scenario 2 may be an application scenario like metropolitan DWDM, a data center (data center, DC), or data center interconnection (data center interconnection, DCI). The optical module provided in this application may be used as a core component of the tributary-line integrated board, and an external service interface is a gray optical module or an LPO.

To be forward compatible with the line board shown in FIG. 2, optionally, the DSP shown in FIG. 5-1 may be further integrated with a functional module 3. The functional module 3 may have a line-side transparent transmission function. The control unit is configured to: when the optical module is used in the line-side optical module in the scenario shown in FIG. 2 (referred to as a scenario 3), control the service processing unit to process data by using the functional module 3. The functional module 3 is configured to perform data processing other than OTN frame processing, or perform transparent transmission processing on the OTN frame.

Therefore, the device manufacturer may invest in a single optical module or DSP solution, to apply the solution to the line-side optical module in the scenario shown in FIG. 3 (referred to as a scenario 1) and the line-side optical module in the scenario shown in FIG. 2 (referred to as a scenario 3).

In the OTN device shown in FIG. 2, it is assumed that the framer integrated on the line board is electrically connected to the pin in the slot on the line board through the route in the line board. The SerDes may be connected to a SerDes of the framer by matching and disposing the gold finger in the slot.

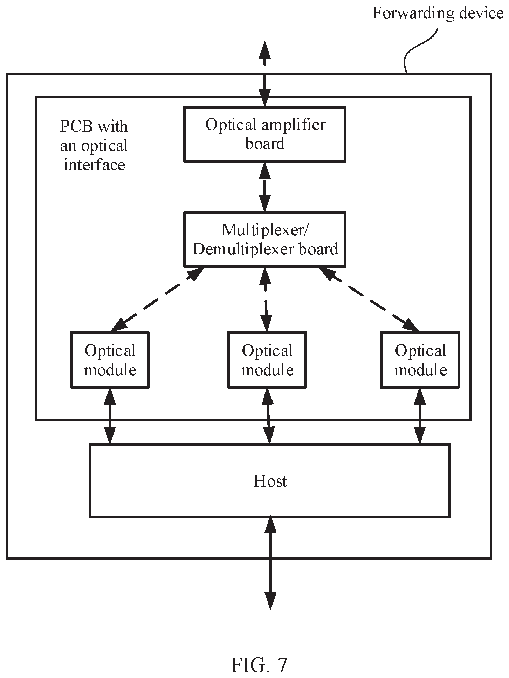

In addition to being used in the OTN device, the optical module may alternatively be used in an optical device in a non-OTN (referred to as a non-OTN optical device). For example, as shown in FIG. 7, the non-OTN optical device may be a forwarding device, for example, a switch/router. A host of the forwarding device is connected to a plurality of optical modules, and a multiplexer/demultiplexer board and an optical amplifier board may be further disposed on an optical path of the plurality of optical modules. The forwarding device has a colored optical interface, and an external service interface may be a switch. The optical module may be a colored optical module (for example, a coherent optical module). Optionally, the host may be connected to a single optical module, and correspondingly, no multiplexer/demultiplexer board may be disposed on an optical path of the optical module. The optical module may be a gray optical module. Alternatively, although the optical module is used in the OTN device, the optical module is not configured to process the OTN frame. Optionally, the DSP shown in FIG. 5-1 may be further integrated with the functional module 4, so that the optical module shown in FIG. 5-1 is used in a scenario in which the OTN frame does not need to be processed (referred to as a scenario 4). The functional module 4 is configured to perform data processing other than OTN frame processing, or perform transparent transmission processing on the OTN frame. The control unit is configured to: when the optical module shown in FIG. 5-1 is used in the scenario 4, control the service processing unit to process data by using the functional module 4.

Therefore, the device manufacturer may invest in a single optical module or DSP solution, to apply the solution to the line-side optical module in the scenario shown in FIG. 3 (referred to as a scenario 1) and the line-side optical module in the scenario shown in FIG. 7 (referred to as a scenario 4).

In the forwarding device with an optical interface shown in FIG. 7, it is assumed that the forwarding device is electrically connected to a pin in a slot on the PCB by using a route in the PCB shown in FIG. 7. The SerDes in the optical module may be connected to a SerDes of the forwarding device by matching and disposing the gold finger in the slot.

Division into the modules or units described in FIG. 5-1 is merely logical function division. During actual implementation, another division manner may be used. For example, logic circuits configured to implement different functional modules may be different. Alternatively, for example, logic circuits configured to implement different functional modules may be all or partially the same. In other words, the DCP may include at least one shared logic circuit, and the shared logic circuit may be configured to implement some or all functions of the plurality of functional modules. This helps reduce a logical scale of the DSP, reduce a size of the optical module, and improve integration of the device.

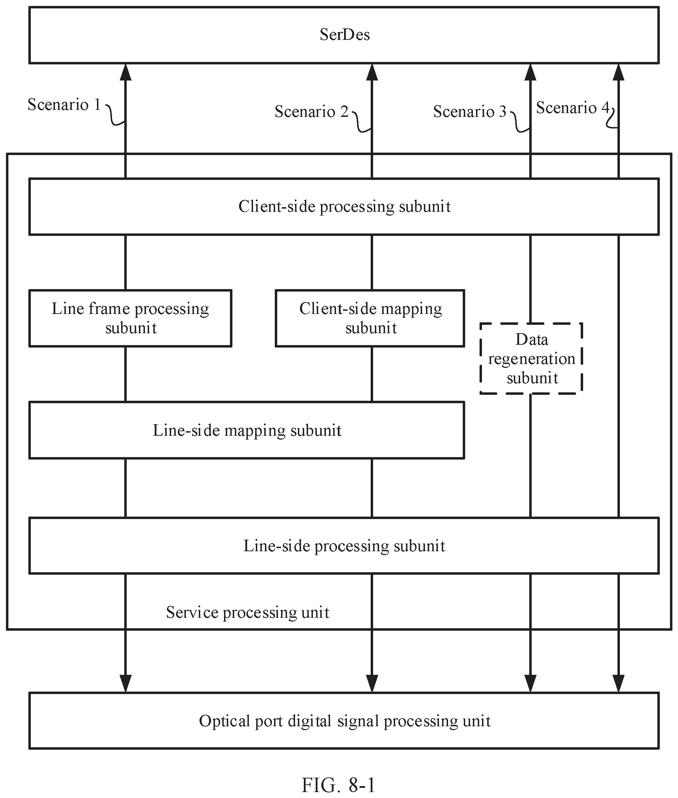

FIG. 8-1 schematically shows another possible implementation of a service processing unit in FIG. 5-1. As shown in FIG. 8-1, the service processing unit may include a client-side processing subunit, a line-side processing subunit, a line frame processing subunit, a line-side mapping subunit, and a client-side mapping subunit.

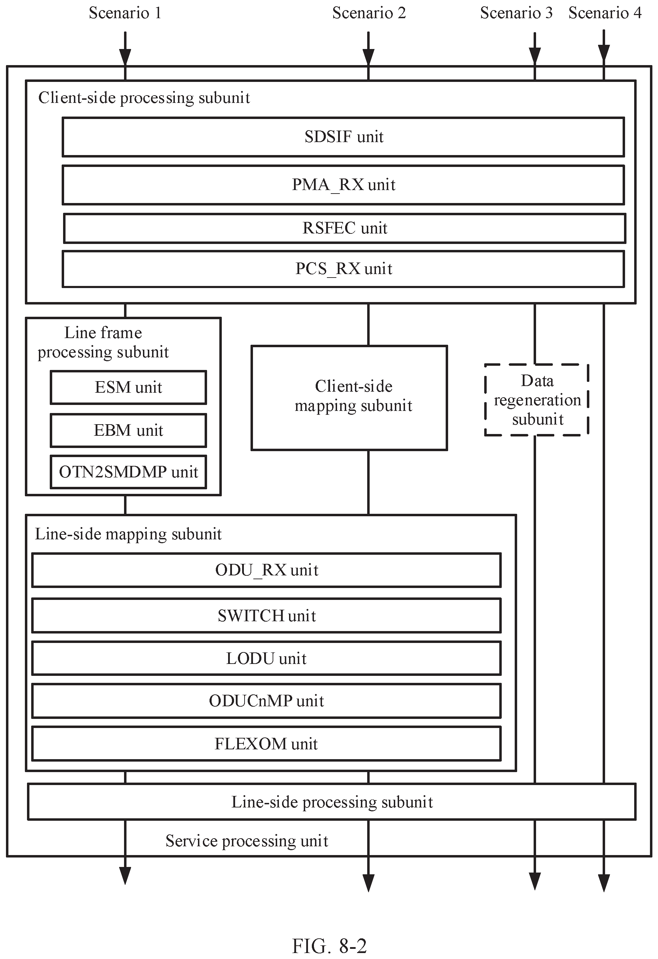

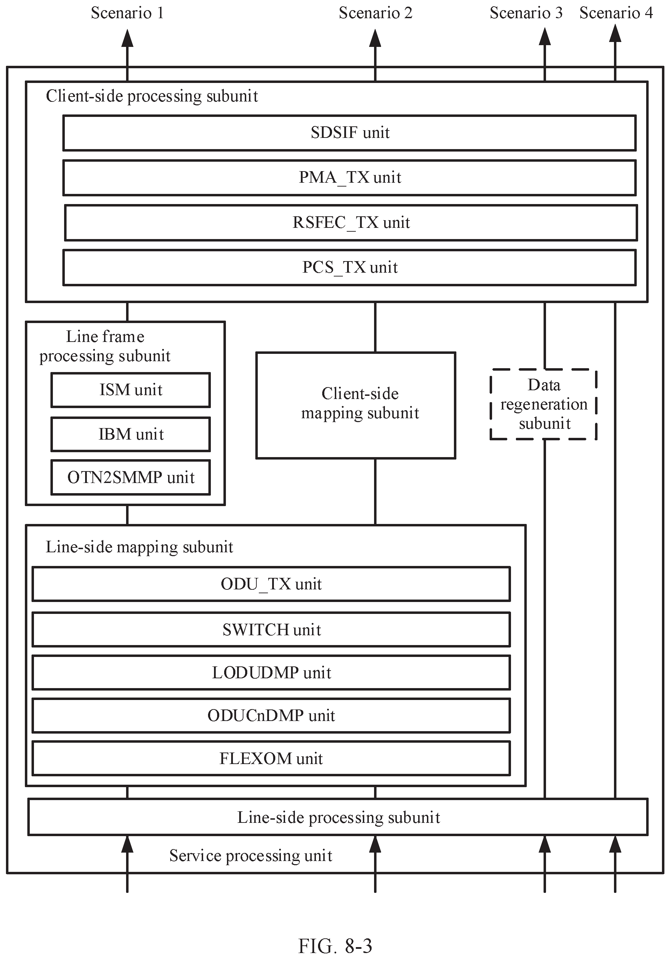

All or some of the subunits shown in FIG. 8-1 may each include a plurality of functional units. FIG. 8-2 schematically shows functional units enabled by a service processing unit in a downlink data transmission direction. FIG. 8-3 schematically shows functional units enabled by a service processing unit in an uplink data transmission direction.

When the optical module is used in the scenario 1, the control unit may control the service processing unit to process data by using the client-side processing subunit, the line frame processing subunit, the line-side mapping subunit, and the line-side processing subunit. For example, after receiving an electrical signal from the SerDes, the client-side processing subunit recovers a cross-connect data unit from the electrical signal. The line frame processing subunit may process the cross-connect data unit according to an interface protocol with the electrical cross-connect board, for example, demap the cross-connect data unit into an ODUk. The line-side mapping subunit maps and/or multiplexes the ODUk into a FlexO. The line-side processing subunit frames the FlexO, to obtain a digital electrical signal, and then sends the digital electrical signal to the optical port digital signal processing unit shown in FIG. 5-1. In the scenario 1, the optical module is directly connected to the electrical cross-connect board, to support cross services of the optical data unit and electrical-layer protection applications.

With reference to FIG. 8-2, the following describes a processing process performed by the service processing unit on data in the downlink data transmission direction in the scenario 1.

An SDSIF unit may receive an electrical signal (or referred to as SerDes input/output data) from the SerDes, and process the data, where the processing includes at least one of the following: space division cross-connection, 1588 timestamp extraction, clock domain conversion, and the like.

A physical medium attachment (physical medium attachment, PMA)_RX unit may perform at least one of the following processing on the data processed by the SDSIF unit: distribution scheduling, AM locking, bit reordering (MSB/LSB), bit width conversion, and clock domain isolation processing.

A Reed-Solomon forward error correction (Reed-Solomon Forward Error Correction, RSFEC) unit may perform RS FEC decoding on the data processed by the PMA_RX unit.

A physical coding sublayer (physical coding sublayer, PCS)_RX unit may process the data obtained through decoding by the RSFEC unit for sending to a cross-connect board interface, where the processing includes at least one of the following: byte/CRC reordering, 64/66B coding, scrambling, interface adaptation, and cross-connection.

An egress shared memory (egress shared memory, ESM) unit may process a cell inserted by the electrical cross-connect board during framing of the cross-connect data unit. A format of the cross-connect data unit is not limited in this application. For example, the cross-connect data unit may be a data structure defined in a next generation switch fabric (next generation switch fabric, NGSF) protocol, and the cross-connect data unit may include a 16-byte (byte) control cell and 192-byte or 384-byte data. The ESM unit may support inserting, by the electrical cross-connect board, of a control cell defined in the NGSF protocol, and support functions such as cyclic redundancy check (Cyclic Redundancy Check, CRC) insertion and CRC8 error correction of a cell header.

An EBM unit may perform downlink buffering processing based on the cell processed by the ESM unit, and may support at least one of ordering, OTN service delay symmetry handling, intra-board multicast, and service bandwidth anomaly protection.

An OTN2SMDMP unit may support demapping from the cross-connect data unit to the OTN frame, for example, to obtain the ODUk, or recovering the ODUk from the cross-connect data unit. The cross-connect data unit may also be referred to as a section monitor (section monitor, SM) cell.

An ODU_RX unit may perform WTT receiving processing on the ODUk, for example, having at least one of functions such as framing, descrambling, overhead extraction, maintenance signal insertion, TCMi clearing, and test signal detection.

A SWITCH unit may perform cross-connection processing on the ODUk processed by the ODU_RX unit, and support loopback.

An LODU unit may perform WTT transmission processing on the lower-order ODUk/ODUCn, for example, at least one of frame header insertion and tracking, overhead insertion (from an OHP), maintenance signal insertion, delay measurement, and test signal insertion.

The ODUCnMP unit may map the lower-order ODUk into the line high-order ODUCn, and perform WTT transmission processing on the high-order ODUCn, for example, at least one of frame header insertion and tracking, overhead insertion (from the OHP), maintenance signal insertion, delay measurement, and test signal insertion, for example, perform ODUCn processing in the line-side transmission direction, for example, at least one of OA11 insertion, AIS insertion, LS scrambling, and ODU scrambling.

A FLEXOM unit can map the ODUC into the FLEXO.

The line-side processing subunit may complete framing processing of downlink data (for example, the FLEXO). Then, the line-side processing subunit may send the obtained digital electrical signal to the optical port digital signal processing unit. The line-side processing subunit is also referred to as a FLEXF unit.

With reference to FIG. 8-3, the following describes a processing process performed by the service processing unit on data in the uplink data transmission direction in the scenario 1.

The FLEXODF unit and the FLEXODM unit may perform at least one of FlexO overhead monitoring, demapping into the ODUCn, ODUCn framing, and deskew (deskew) processing. For example, the FLEXODF unit may receive a digital electrical signal from the optical port digital signal processing unit, and deframe (or frame) the digital electrical signal, to obtain uplink data (for example, the FLEXO). The FLEXODM unit can demap the FLEXO into the ODUC.

An ODUCnDMP unit may perform ODUCn processing on the ODUC in a line-side receiving direction, including at least one of ODUC/1-50 framing, LS descrambling, ODU descrambling, OA11 extraction, AIS detection, and ODUCn alignment; and perform WTT receiving processing on the line high-order ODUCn, for example, at least one of framing, descrambling, overhead extraction (output to the OHP), maintenance signal insertion, TCMi clearing, and test signal detection.

An LODUDMP unit may perform WTT receiving processing on the low-order ODUCn, for example, at least one of framing, descrambling, overhead extraction (output to the OHP), maintenance signal insertion, TCMi clearing, and test signal detection.

Optionally, the ODUCnDMP unit may further perform line demapping processing, for example, demap the ODUcn into the ODUk/ODUflex. Correspondingly, the LODUDMP unit may perform WTT receiving processing on the low-order ODUk/ODUflex.

The SWITCH unit may perform cross-connection processing on the ODUk/flex, and support loopback.

The ODU_TX unit may perform WTT transmission processing on the ODUk/ODUflex processed by the SWITCH unit, for example, at least one of frame header insertion and tracking, overhead insertion, maintenance signal insertion, delay measurement, and test signal insertion.

The OTN2SMDMP unit supports OTN-to-SM cell mapping.

The IBM unit may perform uplink buffering processing, for example, at least one of supporting OTN data buffering, groomed bandwidth supervision, service bandwidth exception protection, and timestamp processing.

An ingress shared memory (ingress shared memory, ISM) unit can frame the cross-connect data unit, and insert a cell into the cross-connect data unit. A format of the cross-connect data unit is not limited in this application. For example, the cross-connect data unit may be a data structure defined in the NGSF protocol, and the cross-connect data unit may include a 16-byte (byte) control cell and 192-byte or 384-byte data. The ISM unit may support inserting of a control cell defined in the NGSF protocol, and support functions such as cyclic redundancy check (Cyclic Redundancy Check, CRC) insertion and CRC8 error correction of a cell header.

A PCS_TX unit can process data processed by the ISM unit for sending to an interface, including at least one of byte/CRC reordering, 64/66B coding, scrambling, interface adaptation, and cross-connection.

An RSFEC_TX unit may perform RSFEC encoding on the data processed by the PCS_TX unit.

A PMA_TX unit may perform at least one of distribution scheduling, AM unlocking, bit order adjustment (MSB/LSB), bit width conversion, and clock domain isolation processing on the data obtained through encoding by the RSFEC_TX unit.

The SDSIF unit may perform SerDes input/output data processing on the data processed by the PMA_TX unit, including at least one of space division cross-connection, 1588 timestamp extraction, and clock domain conversion. Then, the SDSIF unit may send the obtained data to the SerDes.

When the optical module is used in the scenario 2, the control unit may control the service processing unit to process data by using the client-side processing subunit, the client-side mapping subunit, the line-side mapping subunit, and the line-side processing subunit. For example, after receiving an electrical signal from the SerDes, the client-side processing subunit recovers service data from the electrical signal. The client-side mapping subunit maps the service data into an ODUk. The line-side mapping subunit maps and/or multiplexes the ODUk into a FlexO. The line-side processing subunit frames the FlexO, to obtain a digital electrical signal, and then sends the digital electrical signal to the optical port digital signal processing unit shown in FIG. 5-1. For specific functions of the client-side processing subunit and the line-side processing subunit, refer to the foregoing related descriptions. Details are not described herein again. In the scenario 2, the client side may be connected to a switch/router/third-party OTN device by using a standard gray optical module like a quad small form-factor pluggable (quad small form-factor pluggable, QSFP) 28/QSFP-DD optical module. The client side may support access of Ethernet services such as 100GE/flexible Ethernet (flexible Ethernet, FlexE), 200GE/FlexE, 400GE/FlexE, 800GE, future 1.6TE, and 3.2TE, support hybrid access of the foregoing services, support OTU4 and client-side FlexO access, and support high-precision 1588 features for Ethernet (Ethernet, ETH) /FlexE. The line side may support FlexO output, and support mapping and/or demapping such as a GMP/BMP.

When the optical module is used in the scenario 3, the control unit may control the service processing unit to process data by using the client-side processing subunit and the line-side processing subunit. For example, the line-side processing subunit is connected to the optical port digital signal processing unit. After receiving the electrical signal from the framer chip by using the SerDes, the client-side processing subunit recovers the FlexO from the electrical signal. The line-side processing subunit frames the FlexO, to obtain a digital electrical signal, and then sends the digital electrical signal to the optical port digital signal processing unit shown in FIG. 5-1. It is equivalent to that the service processing unit transparently transmits the FlexO. For specific functions of the client-side processing subunit and the line-side processing subunit, refer to the foregoing related descriptions. Details are not described herein again. In the scenario 3, the client-side processing subunit is connected to the framer chip shown in FIG. 2, and an interface may be a fiber optic interface connector (fiber optic interface connector, FOIC) interface. The FOIC interface is configured to adapt to a multi-channel parallel interface. For example, the scrambled FlexO frame may be divided into four logical signals, and the four logical signals are transmitted through four parallel physical links. The line-side processing subunit is connected to the optical port digital signal processing unit.

When the optical module is used in the scenario 4, the control unit may control the service processing unit to process data by using the client-side processing subunit and the line-side processing subunit. For example, after receiving an electrical signal from the SerDes, the client-side processing subunit recovers a FlexO-zr from the electrical signal, where "zr" is short for "Ze best range", and indicates that a maximum range is 80 km. The line-side processing subunit frames the FlexO-zr, to obtain a digital electrical signal, and then sends the digital electrical signal to the optical port digital signal processing unit shown in FIG. 5-1. For specific functions of the client-side processing subunit and the line-side processing subunit, refer to the foregoing related descriptions. Details are not described herein again.

The functional modules shown in FIG. 5-1 may include more or fewer subunits than those shown in FIG. 8-1. For example, in addition to the client-side processing subunit and the line-side processing subunit, the functional module 3 shown in FIG. 5-1 may further include a data regeneration subunit (refer to the dashed box shown in FIG. 8-1). The data regeneration subunit is configured to demap and/or demultiplex the FlexO obtained by the client-side processing subunit into an ODUCn, and then map and/or multiplex the ODUCn into a FlexO. Optionally, the data regeneration subunit may be further configured to: perform overhead monitoring on the FlexO obtained by the client-side processing subunit, and process the ODUCn obtained through demapping and/or demultiplexing.

It can be seen from the implementation of the service processing unit in FIG. 8-1 that, the functional module 1 to the functional module 4 shown in FIG. 5-1 may share the client-side processing subunit and the line-side processing subunit to process data, and the functional module 1 and the functional module 2 also share the line-side mapping subunit. In other words, only the line frame processing subunit needs to be added based on the DSP solution of the line-side optical module shown in FIG. 6, so that the line frame processing subunit and the line-side mapping subunit can be integrated into the DSP. Therefore, the optical module is directly connected to the electrical cross-connect board and completes corresponding service transmission with the electrical cross-connect board, and no framer is additionally disposed in the line board. Because a size of a circuit used to implement the line frame processing subunit is smaller than the size of the framer, for example, less than 10% more logic units are added, the line frame processing subunit is newly disposed in the DSP chip, an increased size of the DSP chip is far smaller than the size of the framer. This further helps reduce layout space and heat dissipation space on the line board, improves integration of the line board, and ensures heat dissipation. A single optical module is designed to support a plurality of application scenarios, and only 10% of logic gates need to be added to integrate the functions of the line-side framer, to greatly reduce system power consumption and chip costs.

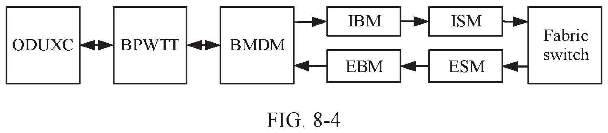

FIG. 8-4 schematically shows another implementation of a line frame processing subunit. As shown in FIG. 8-4, the line frame processing subunit includes an ISM unit, an IBM unit, a buffer management data mapper (buffer management data mapper, BMDM) unit, a BPWTT unit, an ESM unit, and an EBM unit.

After the line frame processing subunit receives downlink data from the client-side processing subunit, the ESM unit, the EBM unit, the BMDM unit, and the BPWTT unit may sequentially process the downlink data. For processing of the downlink data by the ESM unit and the EBM unit, refer to the foregoing related descriptions. The ESM unit may complete data transmission protocol downlink processing. The EBM unit may complete downlink (from a cross-connect board direction) buffering for buffering an ODU/SDH/OSU cell, and implements ordering buffer, bandwidth supervision, and three-level multicast processing. The BMDM unit may recover an ODU unit from a cross-connect data unit, for example, including the OTN2SMDMP unit described above. The BPWTT unit may complete overhead processing of an ODUk, for example, including at least one of the ODU_RX unit, the SWITCH unit, and the LODU unit described above.

After the line frame processing subunit receives uplink data from the line-side mapping subunit, the BPWTT unit, the BMDM unit, the IBM unit, and the ISM unit may sequentially process the uplink data. The BPWTT unit may complete overhead processing of an ODUk, for example, including at least one of the LODUDMP unit, the SWITCH unit, and the ODU_TX unit described above. The BMDM unit may complete slicing of an ODU into cross-connect data units, for example, including the OTN2SMDMP unit described above. For processing of the uplink data by the IBM unit and the ISM unit, refer to the foregoing related descriptions. The IBM unit may be configured to complete uplink (to a cross-connect board direction) buffering for buffering an ODU/SDH/OSU unit (cell) and the like. The ISM unit may be configured to complete data transmission protocol uplink processing.

In the OTN device shown in FIG. 3, an uplink data transmission direction of the electrical interface is a direction from the optical module to a device (for example, the framer or the electrical cross-connect board) connected to the optical module through the electrical interface, and a downlink data transmission direction of the electrical interface is a direction from the device (for example, the framer or the electrical cross-connect board) connected to the optical module through the electrical interface to the optical module. As mentioned above, the downlink data transmission direction of the DSP is a data transmission direction from the SerDes to the optical device, and the uplink data transmission direction of the DSP is a data transmission direction from the optical device to the SerDes. The uplink data is data transmitted in the uplink data transmission direction, and the downlink data is data transmitted in the downlink data transmission direction.

For specific functions of the subunits and/or the units and specific data processing procedures performed by the subunits and/or the units described above, refer to related content in the interfaces for the OTN standard G709 released by the International Telecommunications Union-Telecommunication Standardization Sector (international telecommunication union-telecommunication standardization sector, ITU-T).

An error correction technology used by the service processing unit is not limited in this application, and Reed-Solomon forward error correction (Reed-Solomon forward error correction, RSFEC) is merely used as an example. This application limits neither a type of the cross-connect data unit received by the line frame processing subunit in the downlink data transmission direction nor a type of the cross-connect data unit sent by the line frame processing subunit in the uplink data transmission direction. The foregoing uses an example in which the cross-connect data unit is of a data structure defined by the NGSF protocol. This application limits neither a type of the service data received by the client-side mapping subunit in the downlink data transmission direction nor a type of the service data output in the uplink data transmission direction. This application limits neither a type of the OTN frame received by the line-side mapping subunit in the downlink data transmission direction nor a type of the OTN frame sent by the line-side mapping subunit in the uplink data transmission direction. The foregoing uses an example in which the OTN frame is an ODUk. This application limits neither a specific process or path of multiplexing and/or mapping of the OTN frame performed by the line-side mapping subunit in the downlink data transmission direction nor a specific process or path of demultiplexing and/or demapping of the OTN frame performed by the line-side mapping subunit in the uplink data transmission direction. For example, the line-side mapping unit performs the foregoing process of the OTN frame by using at least one of a generic mapping procedure (generic mapping procedure, GMP), a bit-synchronous mapping procedure (bit-synchronous mapping procedure, BMP), and an asynchronous mapping procedure (asynchronous mapping procedure, AMP). This application limits neither a type of the OTN frame output by the line-side mapping subunit in the downlink data transmission direction nor a type of the OTN frame received by the line-side mapping subunit in the uplink data transmission direction. The foregoing uses an example in which the OTN frame is data of a FlexO format.

In different application scenarios, service processing units in the DSP usually relate to different service processing manners, and different service processing manners usually need to be implemented by cooperating with different SerDes rates. Compared with the DSP integrated with a plurality of SerDes with different rates, a DSP integrated with a rate-adjustable SerDes is proposed in this application, so that the SerDes in the DSP can transmit data at different data transmission rates in different application scenarios. Optionally, the control unit may control the SerDes to transmit data with the connected device at a rate required in the application scenario. For example, in the scenario 1, the control unit may control the SerDes to transmit data with the electrical cross-connect board at a rate 1. In the scenario 2, the control unit may control the SerDes to transmit data with the service-side optical module at a rate 2. In the scenario 3, the control unit may control the SerDes to transmit data with the framer on the line board at a rate 3. In the scenario 4, the control unit may control the SerDes to transmit data with the forwarding device at a rate 4.

Data transmission rates of the SerDes that are required in different application scenarios are not limited to be different in this application. For example, the rate 2 and the rate 3 may be the same. However, as described above, the data transmission rate of the SerDes1 shown in FIG. 3 is usually greater than the data transmission rate of the SerDesb shown in FIG. 2. Therefore, the rate 1 is usually greater than the rate 3. In this application, the rate 1 may be referred to as a high rate, and the rate 2 and the rate 3 may be referred to as low rates.

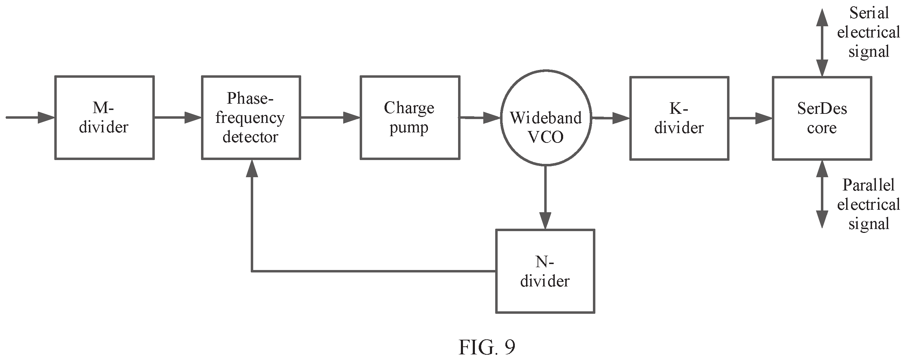

An implementation of the rate-adjustable SerDes is not limited in this application. FIG. 9 schematically shows a possible structure of a SerDes. As shown in FIG. 9, the SerDes may include an M-divider, a K-divider, an N-divider, a phase-frequency detector (phase-frequency detector, PFD), a charge pump (charge pump), a wideband voltage-controlled oscillator (voltage controlled oscillator, VCO), and a SerDes core (core).

The M-divider is configured to perform M frequency division on an input signal, where a frequency of an output signal is 1/M of a frequency of the input signal, and M is a positive integer. The N-divider is configured to perform N frequency division on a carrier signal generated by the wideband VCO, where N is a positive integer. The PFD is configured to compare a frequency difference and/or a phase difference between the output signal of the M-divider and an output signal of the N-divider, and output an error signal, where the error signal may indicate a magnitude of the difference based on a voltage. The charge pump is configured to generate and output a control signal based on the error signal, where a voltage of the control signal is related to a voltage of the error signal. The wideband VCO is configured to generate the carrier signal under control of a control signal output by the charge pump. The carrier signal is, for example, a sine signal, and a frequency of the carrier signal is related to the voltage of the control signal. The K-divider is configured to perform K frequency division on the carrier signal output by the wideband VCO, where K is a positive integer. The carrier signal output by the K-divider may be used as a reference electrical signal (or referred to as a clock electrical signal). The SerDes core is configured to transmit a serial electrical signal based on the reference electrical signal and to-be-transmitted data. A rate at which the SerDes core transmits the serial electrical signal is related to a frequency of the reference electrical signal. Therefore, the control unit may adjust the data transmission rate of the SerDes core by adjusting at least one of sizes of M, N, and K.

As described above, the control unit may control the service processing unit to process data by using a functional module corresponding to the application scenario, and may further control the SerDes to transmit data at a rate required by the application scenario. In addition, as described above, the optical module provided in this application may be disposed on a plurality of types of mainboards. For example, in the scenario 1 and the scenario 3, the gold finger of the optical module may be disposed in the slot on the line board. In the scenario 2, the gold finger of the optical module may be disposed in the slot on the tributary-line integrated board. In the scenario 3, the gold finger of the optical module may be disposed in the slot on the PCB with an optical interface. As shown in FIG. 5-1, the control unit may be connected to one or more pins in the gold finger. For ease of differentiation, the one or more pins are referred to as configuration pins in this application. After the optical module is connected to the mainboard through the gold finger, the control unit may receive, through the configuration pin, a configuration signal fed back by the mainboard. In different scenarios, the mainboard may feed back different configuration signals to the control unit through the configuration pin, and the configuration signal indicates the control unit to control the functional module used by the service processing unit, and may further indicate the control unit to control the data transmission rate of the SerDes.

For example, when the optical module shown in FIG. 5-1 is disposed on the line board shown in FIG. 3 through the gold finger, the line board may feed back a configuration signal 1 to the control unit through the configuration pin in the gold finger, and the control unit may control, based on the configuration signal 1, the service processing unit to process data by using the functional module 1, and may further control the SerDes to transmit data at the rate 1. When the optical module shown in FIG. 5-1 is disposed on the tributary-line integrated board shown in FIG. 6 through the gold finger, the tributary-line integrated board may feed back a configuration signal 2 to the control unit through the configuration pin in the gold finger, and the control unit may control, based on the configuration signal 2, the service processing unit to process data by using the functional module 2, and may further control the SerDes to transmit data at the rate 2. When the optical module shown in FIG. 5-1 is disposed on the line board shown in FIG. 2 through the gold finger, the line board may feed back a configuration signal 3 to the control unit through the configuration pin in the gold finger, and the control unit may control, based on the configuration signal 3, the service processing unit to process data by using the functional module 3, and may further control the SerDes to transmit data at the rate 3. When the optical module shown in FIG. 5-1 is disposed on the PCB with an optical interface shown in FIG. 7 through the gold finger, the PCB with an optical interface may feed back a configuration signal 4 to the control unit through the configuration pin in the gold finger, and the control unit may control, based on the configuration signal 4, the service processing unit to process data by using the functional module 4, and may further control the SerDes to transmit data at the rate 4.

As shown in FIG. 5-1, a module central processing unit may be further disposed in the optical module, and the module central processing unit is connected to the control unit and one or more pins (referred to as control pins) in the gold finger. The module central processing unit can communicate with the mainboard through the control pin and configure the DSP. For example, after the optical module is connected to the mainboard through the gold finger, the module central processing unit may receive, through the control pin, configuration information fed back by the mainboard, and then send the configuration signal to the control unit based on the configuration information. The configuration signal indicates the control unit to control the functional module used by the service processing unit, and may further indicate the control unit to control the data transmission rate of the SerDes. In different scenarios, the mainboard may feed back different configuration information to the module central processing unit through the control pin. Correspondingly, the module central processing unit may send different configuration signals to the control unit based on different configuration information.

For example, when the optical module shown in FIG. 5-1 is disposed on the line board shown in FIG. 3 through the gold finger, the line board may send configuration information 1 to the module central processing unit through the control pin in the gold finger, and the module central processing unit sends a configuration signal 1 to the control unit based on the configuration information 1. When the optical module shown in FIG. 5-1 is disposed on the tributary-line integrated board shown in FIG. 6 through the gold finger, the tributary-line integrated board may send configuration information 2 to the module central processing unit through the control pin in the gold finger, and the module central processing unit sends a configuration signal 2 to the control unit based on the configuration information 2. When the optical module shown in FIG. 5-1 is disposed on the line board shown in FIG. 2 through the gold finger, the line board may send configuration information 3 to the module central processing unit through the control pin in the gold finger, and the module central processing unit sends a configuration signal 3 to the control unit based on the configuration information 1. When the optical module shown in FIG. 5-1 is disposed on the PCB with an optical interface shown in FIG. 7 through the gold finger, the PCB with an optical interface may send configuration information 4 to the module central processing unit through the control pin in the gold finger, and the module central processing unit sends a configuration signal 4 to the control unit based on the configuration information 1. For functions of the configuration signal 1 to the configuration signal 4, refer to related content described above for understanding. For logical levels of the configuration signal 1 to the configuration signal 4, refer to Table 1.

**Table 1**

| Logical level of a configuration signal | Functional module used by a service processing unit | Data transmission rate of a SerDes |
|---|---|---|
| 00 | Functional module 1 | Rate 1 |
| 01 | Functional module 2 | Rate 2 |
| 10 | Functional module 3 | Rate 3 |
| 11 | Functional module 4 | Rate 4 |

The module central processing unit may communicate with the mainboard by executing code stored in the memory, and send a control signal to the control unit based on the configuration information received from the mainboard, to configure the DSP. Therefore, this manner of controlling the DSP may also be referred to as a software control manner. The control unit directly receives, through the configuration pin in the gold finger, the configuration signal fed back by the mainboard, to configure the DSP. This manner of controlling the DSP may also be referred to as a hardware pin control manner.

In the scenario 2, when the service-side optical module connected to the optical module provided in this application is an LPO, in the SerDes design of the optical module provided in this application, a register may be configured, to perform equalization and/or adaptive pre-emphasis during communication with the SerDes of the connected LPO. This optimizes a transmission capability when the optical module is connected to the LPO optical module to a maximum extent. For example, the Serdes of the DSP enables an equalizer and/or a pre-emphasizer to perform pre-emphasis on an electrical signal sent to the LPO, and perform equalization on an electrical signal received from the LPO. Equalization is proposed to overcome time dispersion, and usually has two basic approaches: frequency domain equalization and time domain equalization. Pre-emphasis is a signal processing technology mainly used to improve a signal-to-noise ratio of an electrical signal. High-frequency components of an input signal are compensated at a transmit end, to reduce attenuation of high-frequency signals due to line and device limitations during transmission.

The foregoing uses an example in which the optical module provided in this application is disposed in the OTN device. Optionally, the optical module provided in this application may alternatively be configured to be disposed in a wavelength division multiplexing (wavelength division multiplexing, WDM) device.

The line board, the tributary board, the tributary-line integrated board, the electrical cross-connect board, and the like mentioned in this application may be respectively replaced with a line unit, a tributary unit, a tributary-line integrated unit, and an electrical cross-connect unit (or a cross-connect unit).

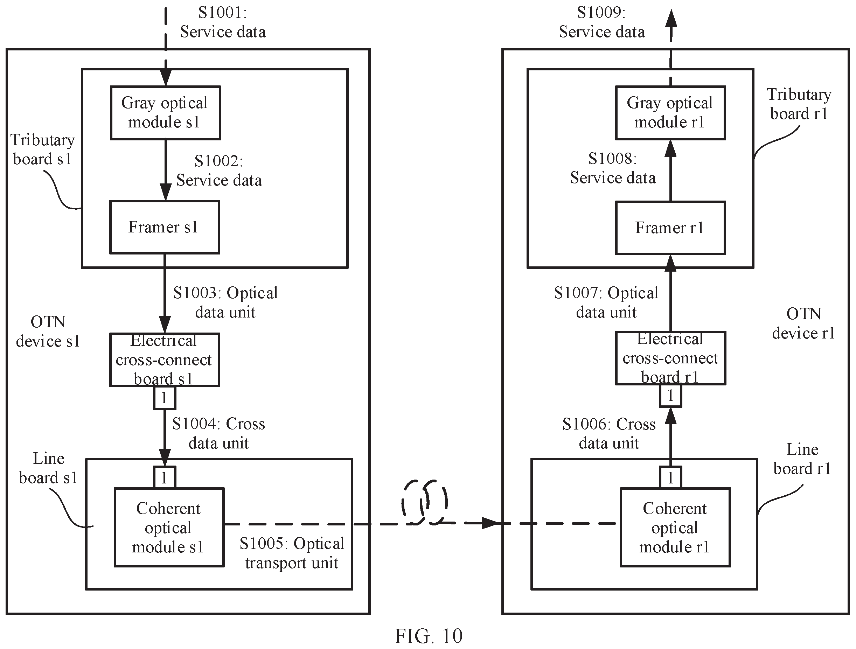

With reference to FIG. 10, the following describes the data transmission method in the scenario 1 by using an example. The scenario 1 may be an application scenario like a long-haul OTN or a metropolitan OTN. As shown in FIG. 10, the scenario 1 includes an OTN device s1 and an OTN device r1, and the OTN device s1 and the OTN device r1 may transmit service data via an OTN frame. The optical module provided in this application may be disposed on a line board as a core component of the line board. The method may include S1001 to S1009.

S1001: A gray optical module s1 receives an optical signal carrying service data.

The gray optical module s1 may receive the optical signal carrying the service data. A type of the service data is not limited in this application. As described above, the service data may include at least one of synchronous digital hierarchy (synchronous digital hierarchy, SDH) data, synchronous transfer module (synchronous transfer module, STM)-N data, Ethernet data, asynchronous transfer mode (asynchronous transfer mode, ATM) data, and Internet protocol (Internet protocol, IP) data.

S1002: The gray optical module s1 converts the optical signal into an electrical signal carrying the service data, and sends the electrical signal to a framer s1.

After receiving the optical signal, the gray optical module s1 may perform optical-electrical conversion on the optical signal, to obtain the electrical signal, and send the service data to the framer s1 via the electrical signal.

S1003: The framer s1 receives the electrical signal; maps the service data carried by the electrical signal, to obtain an optical data unit; and sends the optical data unit to an electrical cross-connect board s1.

The framer s1 may receive the electrical signal; frames the electrical signal, to obtain the service data; map the service data into the optical data unit; and then send the optical data unit to the electrical cross-connect board s1.

Optionally, the gray optical module s1 in a tributary board s1 may be replaced with an electrical interface, and the framer s1 may receive, through the electrical interface, the electrical signal carrying the service data. Correspondingly, the method may not include S1001 and S1002.

S1004: The electrical cross-connect board s1 grooms the optical data unit, encapsulates the optical data unit into a cross-connect data unit, and sends the cross-connect data unit to a coherent optical module s1.

After receiving the optical data unit, the electrical cross-connect board s1 may groom the optical data unit. It is assumed that an output port selected by the electrical cross-connect board s1 for the optical data unit is directly connected to the coherent optical module s1 on a line board s1, the electrical cross-connect board s1 may encapsulate the optical data unit into the cross-connect data unit, and then send the cross-connect data unit to the coherent optical module s1.

S1005: The coherent optical module s1 decapsulates the cross-connect data unit, to obtain the optical data unit; maps and/or multiplexes, into an optical transport unit, the optical data unit obtained through decapsulation; and sends, by using an optical connector, an optical signal carrying the optical transport unit.

The coherent optical module s1 may receive, by using an electrical connector of the coherent optical module s1, an electrical signal carrying the cross-connect data unit. The coherent optical module s1 may receive the cross-connect data unit; decapsulate the cross-connect data unit, to obtain the optical data unit; map and/or multiplex, into an optical transport unit, the optical data unit obtained through decapsulation; and frame the optical transport unit, to obtain an electrical signal. For the process, refer to the foregoing related content of the functional module 1 for understanding. For example, for the process in which the optical module receives the cross-connect data unit, refer to the related descriptions of the client-side processing subunit or the client-side processing subunit and the SerDes for understanding. For the process in which the optical module decapsulates the cross-connect data unit to obtain the optical data unit, refer to the related descriptions of the line frame processing subunit for understanding. For the process in which the optical module maps and/or multiplexes, into the optical transport unit, the optical data unit obtained through decapsulation, refer to the foregoing related descriptions of the line-side mapping subunit for understanding. For the process in which the optical module frames the optical transport unit to obtain the electrical signal, refer to the foregoing related descriptions of the line-side processing subunit for understanding.

Then, the coherent optical module s1 processes the obtained electrical signal. For the process, refer to the foregoing related descriptions of the optical port digital signal processing unit and/or the DAC for understanding.

Then, the coherent optical module s1 may perform electrical-optical conversion on the processed electrical signal, to obtain the optical signal, and send the optical signal by using the optical connector. For the process, refer to the foregoing related descriptions of the optical transmitter for understanding.

S1006: The coherent optical module r1 converts the optical signal into an electrical signal; demaps and/or demultiplexes the optical transport unit carried by the electrical signal into an optical data unit; encapsulates the optical data unit into a cross-connect data unit; and sends the cross-connect data unit to the electrical cross-connect board r1.

The coherent optical module r1 may receive the optical signal by using an optical connector of the coherent optical module r1, and convert the optical signal into the electrical signal. For the process, refer to the foregoing related descriptions of the optical receiver for understanding.

The coherent optical module r1 may process the electrical signal. For the process, refer to the foregoing related content of the ADC and/or the optical port digital signal processing unit for understanding.

Then, the coherent optical module r1 may frame the processed electrical signal, to obtain the optical transport unit; demap and/or demultiplex the optical transport unit, to obtain an optical data unit; encapsulate the obtained optical data unit, to obtain a data frame; and send the obtained data frame by using the electrical connector. For the process, refer to the foregoing related descriptions of the functional module 1 for understanding. For the process in which the coherent optical module r1 frames the processed electrical signal to obtain the optical transport unit, refer to the foregoing related descriptions of the line-side processing subunit for understanding. For the process in which the coherent optical module r1 demaps and/or demultiplexes the optical transport unit to obtain the optical data unit, refer to the foregoing related descriptions of the line-side mapping subunit for understanding. For the process in which the coherent optical module r1 encapsulates the obtained optical data unit to obtain the electrical cross-connect unit, refer to the foregoing related descriptions of the line frame processing subunit for understanding. For the process in which the coherent optical module r1 sends the obtained data frame by using the electrical connector, refer to the foregoing related descriptions of the client-side processing subunit or the client-side processing subunit and the SerDes for understanding.

S1007: The electrical cross-connect board r1 decapsulates the cross-connect data unit, to obtain an optical data unit; grooms the optical data unit; and sends the optical data unit to the framer r1.

After receiving the cross-connect data unit, the electrical cross-connect board r1 may decapsulate the cross-connect data unit, to obtain the optical data unit, and groom the optical data unit. It is assumed that the output port selected by the electrical cross-connect board r1 for the optical data unit is connected to the framer r1 on the tributary board r1, and the electrical cross-connect board r1 may send the optical data unit to the framer r1.

S1008: The framer r1 demaps the optical data unit, to obtain service data; frames the service data, to obtain an electrical signal; and sends the electrical signal to the gray optical module r1.

After receiving the optical data unit, the framer r1 may demap the optical data unit, to obtain the service data; frame the service data, to obtain the electrical signal; and send the electrical signal to the gray optical module r1.

S1009: The gray optical module r1 converts the electrical signal into an optical signal carrying the service data, and sends the optical signal.

Optionally, the gray optical module r1 in the tributary board r1 may be replaced with an electrical interface, and the framer r1 may send, through the electrical interface, the electrical signal carrying the service data. Correspondingly, the method may not include S1009.

As described above, the OTN device shown in FIG. 10 may not include a tributary board. For example, a network device used as a core node may not include a tributary board. As described above, more tributary boards and/or more line boards and/or more electrical cross-connect boards may be integrated into the OTN device, and more optical modules may be integrated into the line board. For example, the OTN device may be shown in FIG. 3. An optical fiber link between the coherent optical module s1 and the coherent optical module r1 may further include another optical transmission component in addition to light, for example, may further include an optical cross-connect unit. In FIG. 10, an example in which the OTN device s1 transmits an optical transport unit to the OTN device r1 is used. Optionally, the OTN device r1 may also transmit an optical transport unit to the OTN device s1. The OTN device s1 and the OTN device r1 may be any two OTN devices shown in FIG. 1.

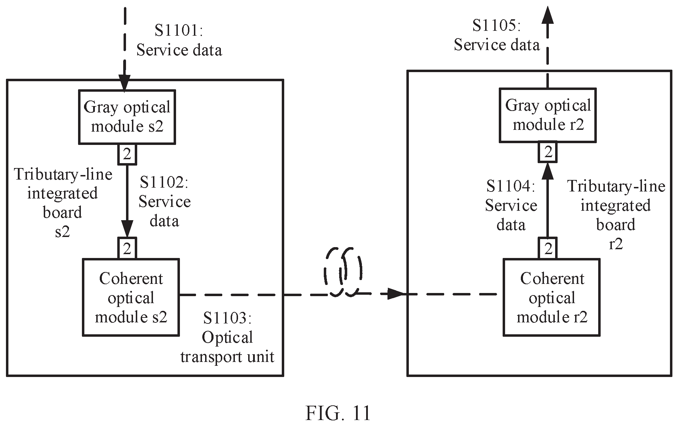

With reference to FIG. 11, the following describes the data transmission method in the scenario 2 by using an example. As shown in FIG. 11, the scenario 2 includes a tributary-line integrated board s2 and a tributary-line integrated board r2, and the two boards may transmit service data via an OTN frame. The scenario 2 may be an application scenario like a metropolitan DWDM, DC, or DCI. A coherent module is a core component of a tributary-line integrated unit, and an external service interface is a gray optical module or an LPO module. The method may include S1101 to S1105.

S1101: A gray optical module s2 receives an optical signal carrying service data.

For step S1101, refer to step S1001 for understanding. Details are not described herein again.

S1102: The gray optical module s2 converts the electrical signal into an electrical signal carrying the service data, and sends the electrical signal to a coherent optical module s2.

After receiving the optical signal, the gray optical module s2 may perform optical-electrical conversion on the optical signal, to obtain the electrical signal, and send the service data to the coherent optical module s2 via the electrical signal.

Optionally, the gray optical module s2 in a tributary-line integrated board s2 may be replaced with an electrical interface, and the coherent optical module s2 may receive, through the electrical interface, the electrical signal carrying the service data. Correspondingly, the method may not include S1101 and S1102.

S1103: The coherent optical module s2 maps the data frame into an optical data unit; maps and/or multiplexes, into an optical transport unit, the optical data unit obtained through mapping; and sends, by using an optical connector, an optical signal carrying the optical transport unit.

The coherent optical module s2 may receive, by using an electrical connector of the coherent optical module s2, an electrical signal carrying the service data. The coherent optical module s2 may receive the service data; map the service data into the optical data unit; map and/or multiplex, into the optical transport unit, the optical data unit obtained through mapping; and frame the obtained optical transport unit, to obtain an electrical signal. For the process, refer to the foregoing related content of the functional module 2 for understanding. For example, for the process in which the optical module receives the service data, refer to the related descriptions of the client-side processing subunit or the client-side processing subunit and the SerDes for understanding. For the process in which the optical module maps the service data into the optical data unit, refer to the related descriptions of the client-side mapping subunit for understanding. For the process in which the optical module maps and/or multiplexes, into the optical transport unit, the optical data unit obtained through mapping, refer to the foregoing related content of the line-side mapping subunit for understanding. For the process in which the optical module frames the obtained optical transport unit to obtain the electrical signal, refer to the foregoing related content of the line-side processing subunit for understanding.

After obtaining the electrical signal, the coherent optical module may process the electrical signal. For the process, refer to the foregoing related descriptions of the optical port digital signal processing unit and/or the DAC for understanding.

Then, the coherent optical module s2 may perform electrical-optical conversion on the processed electrical signal, to obtain the optical signal, and send the optical signal by using the optical connector. For the process, refer to the foregoing related descriptions of the optical transmitter for understanding.

S1104: The coherent optical module r2 converts the optical signal into an electrical signal; demaps and/or demultiplexes the optical transport unit carried by the electrical signal, to obtain an optical data unit; demaps the obtained optical data unit into service data; and sends, to the gray optical module r2, an electrical signal carrying the service data.

The coherent optical module r2 may receive the optical signal by using an optical connector of the coherent optical module r2, and convert the optical signal into the electrical signal. For the process, refer to the foregoing related descriptions of the optical receiver for understanding.

The coherent optical module r2 may process the electrical signal. For the process, refer to the foregoing related content of the ADC and/or the optical port digital signal processing unit for understanding.

Then, the coherent optical module r2 may frame the processed electrical signal, to obtain the optical transport unit; demap and/or demultiplex the optical transport unit, to obtain the optical data unit; demap the obtained optical data unit, to obtain the service data; and send the obtained service data by using the electrical connector. For the process, refer to the foregoing related descriptions of the functional module 2 for understanding. For the process in which the coherent optical module r2 frames the processed electrical signal to obtain the optical transport unit, refer to the foregoing related descriptions of the line-side processing subunit for understanding. For the process in which the coherent optical module r2 demaps and/or demultiplexes the optical transport unit to obtain the optical data unit, refer to the foregoing related descriptions of the line-side mapping subunit for understanding. For the process in which the coherent optical module r2 encapsulates the obtained optical data unit to obtain the service data, refer to the foregoing related descriptions of the client-side mapping subunit for understanding. For the process in which the coherent optical module r2 sends the service data by using the electrical connector, refer to the foregoing related descriptions of the client-side processing subunit or the client-side processing subunit and the SerDes for understanding.

S1105: The gray optical module r2 converts the electrical signal into an optical signal carrying the service data, and sends the optical signal.

After receiving the electrical signal, the gray optical module r2 may perform electrical-optical conversion on the electrical signal, to obtain the optical signal carrying the service data, and send the optical signal.

Optionally, the gray optical module r2 in the tributary-line integrated board r2 may be replaced with an electrical interface, and the coherent optical module may send, through the electrical interface, the electrical signal carrying the service data. Correspondingly, the method may not include S1105.

As described above, the tributary-line integrated board and another tributary-line integrated board may be integrated into a same OTN device. For example, the OTN device may be shown in FIG. 6, and more optical modules may be integrated into the tributary-line integrated board. In FIG. 11, an example in which the tributary-line integrated board s2 transmits the optical transport unit to the tributary-line integrated board r2 is used. Optionally, the tributary-line integrated board r2 may also transmit an optical transport unit to the tributary-line integrated board s2. The tributary-line integrated board s2 and the tributary-line integrated board r2 may be integrated into any two different OTN devices shown in FIG. 1.

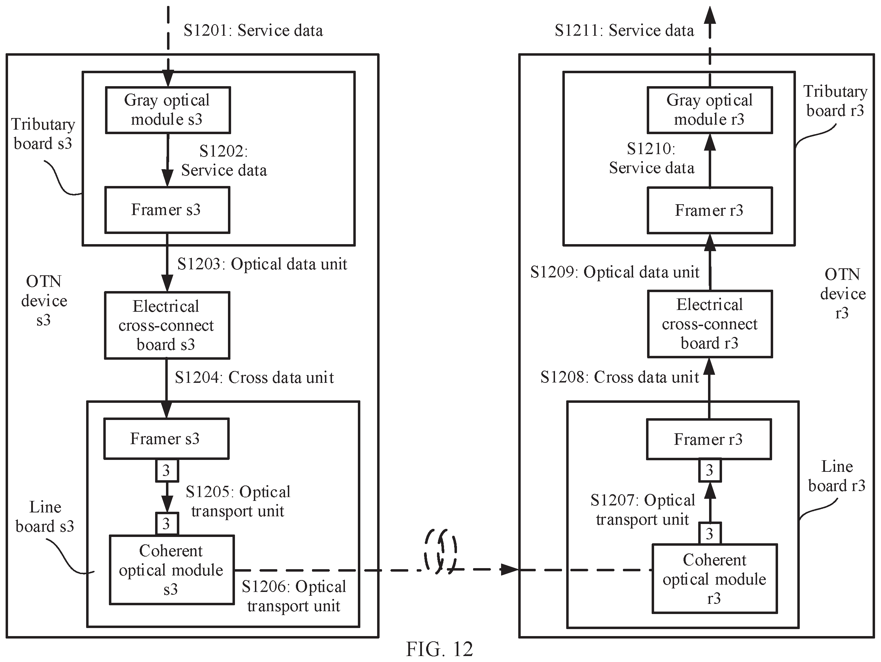

With reference to FIG. 12, the following describes the data transmission method in the scenario 3 by using an example. As shown in FIG. 12, the method may include S1201 to S1211.

S1201: A gray optical module s3 receives an optical signal carrying service data.

S1202: The gray optical module s3 converts the electrical signal into an electrical signal carrying the service data, and sends the electrical signal to a framer s3.

S1203: The framer s3 frames the electrical signal, to obtain the service data; maps the service data, to obtain an optical data unit; and sends the optical data unit to an electrical cross-connect board s3.

S1204: The electrical cross-connect board s3 grooms the optical data unit, encapsulates the optical data unit into a cross-connect data unit, and sends the cross-connect data unit to the framer s3.

For S1201 to S1204, refer to the foregoing related content of S1001 to S1004 for understanding. Details are not described herein again.

S1205: The framer s3 decapsulates the cross-connect data unit, to obtain the optical data unit; maps and/or multiplexes, into an optical transport unit, the optical data unit obtained through decapsulation; and sends an electrical signal carrying the optical transport unit to a coherent optical module s3.

The framer s3 has both a function of a tributary-side framer and a function of a line-side framer. After receiving the electrical signal, the framer s3 may obtain the cross-connect data unit from the electrical signal; decapsulate the cross-connect data unit, to obtain an optical data unit; map and/or multiplex, into an optical transport unit, the optical data unit obtained through decapsulation; frame the obtained optical transport unit, to obtain an electrical signal; and send the electrical signal to the coherent optical module s3.

S1206: The coherent optical module s3 processes the electrical signal, converts the processed electrical signal into an optical signal, and sends the optical signal by using an optical connector.

The coherent optical module s3 may receive, by using an electrical connector of the coherent optical module s3, an electrical signal carrying the optical transport unit. The coherent optical module s3 may receive the optical transport unit, and frame the optical transport unit, to obtain an electrical signal. For the process, refer to the foregoing related content of the functional module 3 for understanding. For example, for the process in which the optical module receives the cross-connect data unit, refer to the related descriptions of the client-side processing subunit or the client-side processing subunit and the SerDes for understanding. For the process in which the optical module frames the optical transport unit to obtain the electrical signal, refer to the foregoing related descriptions of the line-side processing subunit for understanding.

Then, the coherent optical module s3 processes the obtained electrical signal. For the process, refer to the foregoing related descriptions of the optical port digital signal processing unit and/or the DAC for understanding.

Then, the coherent optical module s3 may perform electrical-optical conversion on the processed electrical signal, to obtain the optical signal, and send the optical signal by using the optical connector. For the process, refer to the foregoing related descriptions of the optical transmitter for understanding.

S1207: The coherent optical module r3 converts the optical signal into an electrical signal, processes the electrical signal, and sends the processed electrical signal to the framer r3.

The coherent optical module r3 may receive the optical signal by using the optical connector of the coherent optical module r3, and convert the optical signal into the electrical signal. For the process, refer to the foregoing related descriptions of the optical receiver for understanding.

The coherent optical module r3 may process the electrical signal. For the process, refer to the foregoing related content of the ADC and/or the optical port digital signal processing unit for understanding.

Then, the coherent optical module r3 may frame the processed electrical signal, to obtain an optical transport unit, and send the obtained optical transport unit by using the electrical connector. For the process, refer to the foregoing related descriptions of the functional module 3 for understanding. For the process in which the coherent optical module r3 frames the processed electrical signal to obtain the optical transport unit, refer to the foregoing related descriptions of the line-side processing subunit for understanding. For the process in which the coherent optical module r3 sends the obtained optical transport unit by using the electrical connector, refer to the foregoing related descriptions of the client-side processing subunit or the client-side processing subunit and the SerDes for understanding.

S1208: The framer r3 demaps and/or demultiplexes the optical transport unit carried by the electrical signal into an optical data unit; encapsulates the optical data unit into a cross-connect data unit; and sends the cross-connect data unit to the electrical cross-connect board r3.

After receiving the electrical signal, the framer r3 may frame the electrical signal, to obtain the optical transport unit; demap and/or demultiplex the optical transport unit, to obtain an optical data unit; encapsulate the obtained optical data unit, to obtain the cross-connect data unit; and send the obtained cross-connect data unit by using the electrical connector.

S1209: The electrical cross-connect board r3 decapsulates the cross-connect data unit, to obtain an optical data unit; grooms the optical data unit; and sends the optical data unit to the framer r3.

S1210: The framer r3 demaps the optical data unit, to obtain service data; frames the service data, to obtain an electrical signal; and sends the electrical signal to the gray optical module r3.

S1211: The gray optical module r3 converts the electrical signal into an optical signal carrying the service data, and sends the optical signal.

For step S1209 to step S1211, refer to the foregoing related content of S1007 to S1009 for understanding.

The coherent optical module s and the coherent optical module r shown in FIG. 10 to FIG. 12 may be replaced with other types of optical modules. In other words, the optical module s and the optical module r are not limited in this application to transmit coherent light. For the coherent optical module s and the coherent optical module r, refer to the optical module shown in FIG. 4-1 or FIG. 5-1 for understanding. For the coherent optical module s and the electrical connector of the coherent optical module, refer to the gold finger shown in FIG. 5-1 for understanding. A type of the electrical connector is not limited in this application. An optical fiber link between the coherent optical module s and the coherent optical module r may further include another optical transmission component in addition to light, for example, may further include an optical cross-connect unit.

The coherent optical module s2 shown in FIG. 11 and/or the coherent optical module s3 shown in FIG. 12 may be a same optical module as the coherent optical module s1 shown in FIG. 10. For example, the coherent optical module s1 shown in FIG. 10, the coherent optical module s2 shown in FIG. 11, and the coherent optical module s3 shown in FIG. 12 are the same optical module s. As described in FIG. 5-1, optionally, the optical module s may have a serializer/deserializer SerDes. In the scenario 1 shown in FIG. 10, the SerDes may receive the cross-connect data unit at the rate 1, and in the scenario 2 shown in FIG. 11, the SerDes may receive the service data at the rate 2. In the scenario 3 shown in FIG. 12, the SerDes may receive the optical transport unit at the rate 3. For the rate 1 to the rate 3, refer to Table 1. The rate 1 may be greater than the rate 2 and/or the rate 3, and the rate 2 and the rate 3 may be the same or different.

The coherent optical module r2 shown in FIG. 11 and/or the coherent optical module r3 shown in FIG. 12 may be a same optical module as the coherent optical module r1 shown in FIG. 10. For example, the coherent optical module r1 shown in FIG. 10, the coherent optical module r2 shown in FIG. 11, and the coherent optical module r3 shown in FIG. 12 are the same optical module r. As described in FIG. 5-1, optionally, the optical module r may have a serializer/deserializer SerDes. In the scenario 1 shown in FIG. 10, the SerDes may receive the cross-connect data unit at the rate 1, and in the scenario 2 shown in FIG. 11, the SerDes may receive the service data at the rate 2. In the scenario 3 shown in FIG. 12, the SerDes may receive the optical transport unit at the rate 3. For the rate 1 to the rate 3, refer to Table 1. The rate 1 may be greater than the rate 2 and/or the rate 3, and the rate 2 and the rate 3 may be the same or different.

The following describes how the optical module r and/or the optical module s determine application scenarios of the modules. As described above, the optical module may receive the configuration signal. When the configuration signal is the configuration signal 1 (for example, the logical level is "00"), the optical module may determine that the optical module is used in the scenario 1, that is, the optical module is disposed on the line board and the electrical connector of the optical module is directly connected to the electrical cross-connect board, and enable the functional module 1 shown in FIG. 5-1 in a process of performing S1005. When the configuration signal is the configuration signal 2 (for example, the logical level is "01"), the optical module may determine that the optical module is used in the scenario 2, that is, the optical module is disposed on the tributary-line integrated board, and enable the functional module 2 shown in FIG. 5-1 in a process of performing S1003. When the configuration signal is the configuration signal 3 (for example, the logical level is "10"), the optical module may determine that the optical module is used in the scenario 3, that is, the optical module is disposed on the line board and the electrical connector of the optical module is directly connected to the framer on the line board, and enable the functional module 3 shown in FIG. 5-1 in a process of performing S1206.

As described above, optionally, as shown in FIG. 5-1, the optical module may further include a controller like the module central processing unit, and the controller is configured to send the configuration signal to the DSP; and/or the DSP is directly connected to a configuration pin of the electrical connector, and the configuration pin is configured to receive the configuration signal.

It may be clearly understood by a person skilled in the art that, for the purpose of convenient and brief description, for a detailed working process of the foregoing described system, apparatus, and unit, refer to a corresponding process in the foregoing method examples. Details are not described herein again. "A and/or B" in examples of this application may be understood as including two solutions: "A and B" and "A or B". In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances. This is merely a differentiation manner that is used when objects having a same attribute are described in examples of this application.

In the several examples provided in this application, it should be understood that the disclosed module, apparatus, or device may be implemented in other manners. For example, the described apparatus examples are merely examples. For example, division into the units is merely logical function division. There may be other division manners during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

## Claims

1. An optical module, comprising an optical connector, an optical device, a digital signal processor DSP, and an electrical connector, wherein
the DSP is configured to: receive a data frame by using the electrical connector; when the optical module is disposed on a line board and the electrical connector is directly connected to an electrical cross-connect board, decapsulate the data frame, to obtain an optical data unit; map and/or multiplex, into an optical transport unit, the optical data unit obtained through decapsulation; and frame the obtained optical transport unit, to obtain an electrical signal;
the DSP is further configured to process the obtained electrical signal; and
the optical device is configured to: convert the processed electrical signal into an optical signal, and send the optical signal by using the optical connector.

2. The optical module according to claim 1, wherein the DSP is configured to: when the optical module is disposed on a tributary-line integrated board, map the data frame into an optical data unit; map and/or multiplex, into an optical transport unit, the optical data unit obtained through mapping; and frame the obtained optical transport unit, to obtain an electrical signal; and/or
the DSP is configured to: when the optical module is disposed on the line board and the electrical connector is directly connected to a framer on the line board, frame the data frame, to obtain an electrical signal, wherein the framer is configured to decapsulate a cross-connect data unit sent by the electrical cross-connect board, to obtain an optical data unit; map and/or multiplex the obtained optical data unit into an optical transport unit; and send the obtained optical transport unit to the electrical connector.

3. The optical module according to claim 2, wherein a serializer/deserializer SerDes is integrated into the DSP;
the SerDes is configured to receive the data frame at a first data transmission rate when the optical module is disposed on the line board and the electrical connector is directly connected to the electrical cross-connect board; and
the SerDes is configured to receive the data frame at a second data transmission rate when the optical module is disposed on the tributary-line integrated board, and/or the optical module is disposed on the line board and the electrical connector is directly connected to the framer on the line board, wherein
the first data transmission rate is greater than the second data transmission rate.

4. The optical module according to claim 3, wherein the SerDes is configured to receive the data frame by using an equalizer when the optical module is disposed on the tributary-line integrated board and the electrical connector is directly connected to a linear-drive pluggable optical module LPO.

5. The optical module according to any one of claims 2 to 4, wherein the DSP is further configured to receive a configuration signal;
when the configuration signal is at a first logic level, the DSP determines that the optical module is disposed on the line board and the electrical connector is directly connected to the electrical cross-connect board; and
when the configuration signal is at a second logical level, the DSP determines that the optical module is disposed on the tributary-line integrated board, and/or the optical module is disposed on the line board and the electrical connector is directly connected to the framer on the line board.

6. The optical module according to claim 5, wherein the optical module further comprises a controller, and the controller is configured to send the configuration signal to the DSP; and/or
the DSP is directly connected to a configuration pin of the electrical connector, and the configuration pin is configured to receive the configuration signal.

7. The optical module according to any one of claims 1 to 6, wherein the DSP is configured to perform equalization processing and/or digital-to-analog conversion on the obtained electrical signal.

8. An optical module, comprising an optical connector, an optical device, a digital signal processor DSP, and an electrical connector, wherein
the optical device is configured to receive an optical signal by using the optical connector, and convert the optical signal into an electrical signal;
the DSP is configured to process the electrical signal; and
the DSP is further configured to: frame the electrical signal, to obtain an optical transport unit; when the optical module is disposed on a line board and the electrical connector is directly connected to an electrical cross-connect board, demap and/or demultiplex the optical transport unit, to obtain an optical data unit; encapsulate the obtained optical data unit, to obtain a data frame; and send the obtained data frame by using the electrical connector.

9. The optical module according to claim 8, wherein the DSP is further configured to: when the optical module is disposed on a tributary-line integrated board, demap and/or demultiplex the optical transport unit, to obtain an optical data unit; demap the obtained optical data unit into a data frame; and send the obtained data frame by using the electrical connector; and/or
the DSP is further configured to: when the optical module is disposed on the line board and the electrical connector is directly connected to a framer on the line board, send the optical transport unit by using the electrical connector, wherein the framer is configured to demap and/or demultiplex the optical transport unit into an optical data unit; encapsulate the obtained optical data unit into a cross-connect data unit; and send the cross-connect data unit to the electrical cross-connect board.

10. The optical module according to claim 9, wherein a serializer/deserializer SerDes is integrated into the DSP;
the SerDes is configured to send the obtained data frame at a first data transmission rate when the optical module is disposed on the line board and the electrical connector is directly connected to the electrical cross-connect board; and
the SerDes is configured to send the obtained data frame at a second data transmission rate when the electrical connector is disposed on the tributary-line integrated board, and/or the electrical connector is disposed on the line board and is directly connected to the framer on the line board, wherein
the first data transmission rate is greater than the second data transmission rate.

11. The optical module according to claim 10, wherein the SerDes is configured to send the obtained data frame by using a pre-emphasizer when the optical module is disposed on the tributary-line integrated board and the electrical connector is directly connected to a linear-drive pluggable optical module LPO.

12. The optical module according to any one of claims 9 to 11, wherein the DSP is further configured to receive a configuration signal;
when the configuration signal is at a first logic level, the DSP determines that the optical module is disposed on the line board and the electrical connector is directly connected to the electrical cross-connect board; and
when the configuration signal is at a second logical level, the DSP determines that the optical module is disposed on the tributary-line integrated board, and/or the optical module is disposed on the line board and the electrical connector is directly connected to the framer on the line board.

13. The optical module according to claim 12, wherein the optical module further comprises a controller, and the controller is configured to send the configuration signal to the DSP; and/or
the DSP is directly connected to a configuration pin of the electrical connector, and the configuration pin is configured to receive the configuration signal.

14. The optical module according to any one of claims 8 to 13, wherein the DSP is configured to perform equalization processing and/or analog-to-digital conversion on the electrical signal.

15. The optical module according to any one of claims 1 to 14, wherein the optical signal is a coherent optical signal.

16. A communication device, wherein the communication device comprises a mainboard and one or more optical modules disposed on the mainboard, and the one or more optical modules are optical modules according to any one of claims 1 to 15.

17. The communication device according to claim 16, wherein the mainboard is a line board, the communication device further comprises an electrical cross-connect board, and the one or more optical modules are directly connected to the electrical cross-connect board.

18. A communication system, wherein the communication system comprises a plurality of communication devices and an optical transport network, the optical transport network is configured to transmit an optical signal between different communication devices in the plurality of communication devices, and the plurality of communication devices comprise at least one communication device according to claim 16 or 17.

19. A data transmission method, wherein the method is applied to an optical module, and the method comprises:
receiving a data frame by using an electrical connector of the optical module;
when the optical module is disposed on a line board and the electrical connector is directly connected to an electrical cross-connect board, decapsulating the data frame, to obtain an optical data unit; mapping and/or multiplexing, into an optical transport unit, the optical data unit obtained through decapsulation; and framing the obtained optical transport unit, to obtain an electrical signal; and
processing the obtained electrical signal, wherein the processed electrical signal is converted into an optical signal, and the optical signal is sent by using an optical connector of the optical module.

20. The method according to claim 19, wherein the method further comprises:
when the optical module is disposed on a tributary-line integrated board, mapping the data frame into an optical data unit; mapping and/or multiplexing, into an optical transport unit, the optical data unit obtained through mapping; and framing the obtained optical transport unit, to obtain an electrical signal; and/or
when the optical module is disposed on the line board and the electrical connector is directly connected to a framer on the line board, framing the data frame, to obtain an electrical signal, wherein the framer is configured to decapsulate a cross-connect data unit sent by the electrical cross-connect board, to obtain an optical data unit; mapping and/or multiplexing the obtained optical data unit into an optical transport unit; and sending the obtained optical transport unit to the electrical connector.

21. The method according to claim 20, wherein the optical module has a serializer/deserializer SerDes, and the receiving the data frame by using the electrical connector of the optical module comprises:
controlling the SerDes to receive the data frame at a first data transmission rate when the optical module is disposed on the line board and the optical module is directly connected to the electrical cross-connect board; and
controlling the SerDes to receive the data frame at a second data transmission rate when the optical module is disposed on the tributary-line integrated board, and/or the optical module is disposed on the line board and the optical module is directly connected to the framer on the line board, wherein
the first data transmission rate is greater than the second data transmission rate.

22. The method according to claim 21, wherein the receiving the data frame by using the electrical connector of the optical module comprises:
controlling the SerDes to receive the data frame by using an equalizer when the optical module is disposed on the tributary-line integrated board and the electrical connector is directly connected to a linear-drive pluggable optical module LPO.

23. The method according to any one of claims 20 to 22, wherein the method further comprises:
receiving a configuration signal;
when the configuration signal is at a first logic level, determining that the optical module is disposed on the line board and the optical module is directly connected to the electrical cross-connect board; and
when the configuration signal is at a second logical level, determining that the optical module is disposed on the tributary-line integrated board, and/or the optical module is disposed on the line board and the optical module is directly connected to the framer on the line board.

24. The method according to any one of claims 19 to 23, wherein the processing the obtained electrical signal comprises:
performing equalization processing and/or digital-to-analog conversion on the obtained electrical signal.

25. A data transmission method, wherein the method is applied to an optical module, and the method comprises:
processing an electrical signal, wherein the electrical signal is obtained by performing optical-electrical conversion on an optical signal, and the optical signal is received by using an optical connector of the optical module;
framing the electrical signal, to obtain an optical transport unit; and
when the optical module is disposed on a line board and an electrical connector of the optical module is directly connected to an electrical cross-connect board, demapping and/or demultiplexing the optical transport unit, to obtain an optical data unit; encapsulating the obtained optical data unit, to obtain a data frame; and sending the obtained data frame by using the electrical connector.

26. The method according to claim 25, wherein the method further comprises:
when the optical module is disposed on a tributary-line integrated board, demapping and/or demultiplexing the optical transport unit, to obtain an optical data unit; demapping the obtained optical data unit into a data frame; and sending the obtained data frame by using the electrical connector; and/or
when the optical module is disposed on the line board and the electrical connector is directly connected to a framer on the line board, sending the optical transport unit by using the electrical connector, wherein the framer is configured to demap and/or demultiplex the optical transport unit into an optical data unit; encapsulating the obtained optical data unit into a cross-connect data unit; and sending the cross-connect data unit to the electrical cross-connect board.

27. The method according to claim 26, wherein a serializer/deserializer SerDes is integrated into the optical module, and the sending the obtained data frame by using the electrical connector comprises:
controlling the SerDes to send the obtained data frame at a first data transmission rate when the optical module is disposed on the line board and the electrical connector is directly connected to the electrical cross-connect board; and
controlling the SerDes to send the obtained data frame at a second data transmission rate when the electrical connector is disposed on the tributary-line integrated board, and/or the electrical connector is disposed on the line board and is directly connected to the framer on the line board, wherein
the first data transmission rate is greater than the second data transmission rate.

28. The method according to claim 27, wherein the sending the obtained data frame by using the electrical connector comprises:
controlling the SerDes to send the obtained data frame by using a pre-emphasizer when the optical module is disposed on the tributary-line integrated board and the electrical connector is directly connected to a linear-drive pluggable optical module LPO.

29. The method according to any one of claims 26 to 28, wherein the method further comprises:
receiving a configuration signal;
when the configuration signal is at a first logic level, determining that the optical module is disposed on the line board and the electrical connector is directly connected to the electrical cross-connect board; and
when the configuration signal is at a second logical level, determining that the optical module is disposed on the tributary-line integrated board, and/or the optical module is disposed on the line board and the electrical connector is directly connected to the framer on the line board.

30. The method according to any one of claims 25 to 29, wherein the processing the electrical signal comprises:
performing equalization processing and/or analog-to-digital conversion on the electrical signal.

31. A chip, wherein the chip is integrated into an optical module, the chip comprises a plurality of circuits, and at least one circuit in the plurality of circuits is configured to perform the method according to any one of claims 19 to 30.
